(19) **Europäisches Patentamt European Patent Office Office européen des brevets**

(11) **EP 3 494 181 B1**

(12) **FASCICULE DE BREVET EUROPEEN**

(45) Date de publication et mention de la délivrance du brevet:
**11.02.2026   Bulletin 2026/07**

(21) Numéro de dépôt: **17765221.1**

(22) Date de dépôt: **02.08.2017**

(51) Classification Internationale des Brevets (IPC):
*C09D 9/00* (2006.01)    *C11D 7/24* (2006.01)
*G21F 9/30* (2006.01)    *B01J 20/18* (2006.01)
*B01J 20/12* (2006.01)    *C09D 7/20* (2018.01)
*C09D 7/43* (2018.01)    *C11D 3/40* (2006.01)
*C11D 7/20* (2006.01)    *C11D 17/00* (2006.01)

(52) Classification Coopérative des Brevets (CPC):
**C09D 9/00; B01J 20/12; B01J 20/18; B01J 20/28047; B08B 7/04; C09D 7/20; C09D 7/43; C09D 9/005; C11D 3/40; C11D 7/20; C11D 7/24; C11D 7/5027; C11D 17/003; G21F 9/002; G21F 9/30;**                (Cont.)

(86) Numéro de dépôt international:
**PCT/FR2017/052171**

(87) Numéro de publication internationale:
**WO 2018/024990 (08.02.2018 Gazette 2018/06)**

(54) **GEL ASPIRABLE ET PROCEDE POUR ELIMINER UNE CONTAMINATION CONTENUE DANS UNE COUCHE ORGANIQUE EN SURFACE D'UN SUBSTRAT SOLIDE**

SAUGBARES GEL UND VERFAHREN ZUR ENTSORGUNG EINER KONTAMINATION ENTHALTEND IN EINER ORGANISCHEN SCHICHT AUF EINER OBERFLÄCHE EINES SUBSTRATS

VACUUMABLE GEL AND PROCESS FOR ELIMINATING A CONTAMINATION COMPRISED IN AN ORGANIC LAYER ON A SURFACE OF A SOLID SUBSTRATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **05.08.2016   FR 1657620**
                    **07.04.2017   FR 1753083**

(43) Date de publication de la demande:
**12.06.2019   Bulletin 2019/24**

(73) Titulaire: **Commissariat à l'Energie Atomique et aux Energies Alternatives
75015 Paris (FR)**

(72) Inventeurs:
• **GOSSARD, Alban
  84000 Avignon (FR)**
• **FRANCES, Fabien
  30340 Rousson (FR)**

(74) Mandataire: **Santarelli
Tour Trinity
1 bis Place de la Défense
92400 Courbevoie (FR)**

(56) Documents cités:
**WO-A1-2013/023021      WO-A1-2014/154817
WO-A1-97/08254            WO-A1-97/35323
DE-U1- 29 719 253        US-A- 5 271 773
US-A- 5 690 539**

(52) Classification Coopérative des Brevets (CPC):
(Cont.)C08K 5/0008; Y02P 20/582

## Description

## DOMAINE TECHNIQUE

La présente invention a pour objet un gel pour éliminer une contamination, par exemple une contamination radioactive, contenue dans une couche organique en surface d'un substrat solide.

Plus précisément, par couche organique on entend une couche en un matériau organique, constituée par un matériau organique.

Dans la présente, les termes contamination, par exemple contamination radioactive, contaminant, par exemple contaminant radioactif, ou encore espèce contaminante, par exemple espèce contaminante radioactive sont indifféremment utilisés.

Les espèces contaminantes qui peuvent être éliminées par le gel selon l'invention peuvent être notamment des espèces contaminantes radioactives et/ou chimiquement toxiques, et/ou toxiques du fait de leur forme et/ou de leur taille comme des poussières, des microparticules, des nanoparticules, ou des fibres.

En particulier, le gel selon l'invention peut être utilisé pour éliminer de l'amiante, contenue dans une couche organique en surface d'un substrat solide.

La présente invention a trait, en outre, à un procédé pour éliminer une contamination, par exemple une contamination radioactive, contenue dans une couche organique en surface d'un substrat solide.

Cette couche organique peut être une couche organique de surface contaminée d'un substrat solide constituée par un matériau organique.

Plus précisément, dans ce cas, la couche organique de surface contaminée fait partie intégrante du substrat solide et la couche organique et le substrat solide sont constitués par le même matériau organique.

Ce substrat solide constitué par un matériau organique peut être un substrat massif ou une couche, telle qu'une couche de peinture ou de résine époxy, par exemple une couche de peinture ou de résine époxy formant un revêtement sur une surface d'un (autre) substrat solide.

Ou bien, cette couche organique peut être une couche constituée par un matériau organique contaminé, se trouvant sur une surface d'un substrat solide, cette couche se présentant notamment sous la forme d'une tâche ou de tâches discrètes de matériau organique contaminé souillant ladite surface, par exemple une tâche d'huile ou de bitume contaminée qui souille ladite surface.

Dans ce cas, la couche de surface contaminée et le substrat solide ne sont pas constitués par le même matériau organique et le substrat solide peut être constitué par tout matériau : métal, résine, peinture etc.

Le domaine technique de l'invention peut être défini, de manière générale comme celui de la décontamination, par exemple la décontamination radioactive de surfaces, en vue d'éliminer de ces surfaces la contamination, par exemple la décontamination radioactive, à savoir les espèces contaminantes, par exemple les espèces contaminantes radioactives.

L'invention s'applique, en particulier, à la décontamination de surfaces contaminées dans le cadre du démantèlement et de l'assainissement d'installations nucléaires, ou dans le cadre du désamiantage de bâtiments.

## ÉTAT DE LA TECHNIQUE ANTÉRIEURE

Dans le cadre des opérations d'assainissement et de démantèlement d'installations nucléaires, différentes étapes de décontamination sont nécessaires.

La diversité des matériaux présents dans les installations nucléaires ainsi que l'état de surface de ces matériaux rendent les opérations de décontamination difficiles et nécessitent d'adapter les procédés de traitement aux matériaux et à la contamination visée.

En particulier, un des problèmes les plus importants qui se pose est la décontamination des matrices organiques contaminées composées de matières organiques contaminées, telles que des peintures ou des résines époxy, ou la décontamination des surfaces souillées par des traces de matrices organiques contaminées, comme des tâches de bitume ou d'huile contaminées qui sont souvent présentes sur les chantiers d'installations nucléaires.

Des difficultés sont rencontrées principalement lorsque la contamination est incrustée au sein de la matrice organique.

Les procédés de décontamination utilisés aujourd'hui pour la décontamination de matrices organiques telles que les peintures murales ou les résines époxy font notamment appel à des techniques classiques de nettoyage de surfaces à l'aide de lingettes -utilisées à sec ou imprégnées de solutions décontaminantes et/ou dégraissantes- ou d'essuyage, qui sont réalisées manuellement dans des environnements nucléaires souvent très sensibles.

De nombreux procédés de décontamination mécaniques assez rudimentaires sont également utilisés. Il s'agit de procédés de décontamination qui font appel à des techniques telles que la découpe, le ponçage ou le décapage. Ces techniques s'avèrent fastidieuses et pénibles en termes de mise en œuvre, génèrent des poussières, et sont souvent peu efficaces sur des couches organiques relativement épaisses.

Ces procédés de décontamination mécaniques sont en cours d'optimisation et sont aujourd'hui souvent couplés à des procédés thermiques en utilisant par exemple des lasers ou des lances thermiques.

Ces procédés mécaniques optimisés restent malgré tout relativement contraignants du point de vue de la pénibilité du travail. En outre, l'apport d'un procédé thermique peut augmenter significativement le coût de mise en œuvre.

D'autres procédés de décontamination utilisent des solvants chimiques aqueux ou organiques. Ces procédés peuvent également permettre la décontamination de matrices organiques contaminées en appliquant les solvants directement sur les surfaces de ces matrices.

Ces procédés de décontamination qui utilisent des solvants chimiques sont cependant assez peu utilisés sur les chantiers de décontamination, du fait de la production importante d'effluents contaminés.

En ce qui concerne maintenant l'élimination de traces de matrices organiques contaminées, telles que des tâches d'huile ou de bitume contaminées qui souillent les surfaces d'installations nucléaires, il n'existe pas, là-encore, de procédés de décontamination adéquats, d'autant plus que ces traces de matrices organiques sont généralement collantes et fixées au support sur lequel elles se trouvent. C'est en particulier le cas des tâches de bitume contaminées.

Il existe certes des systèmes d'aspirations qui permettent de récupérer les poussières labiles se trouvant sur un substrat, mais ces systèmes ne sont donc pas adaptés aux dépôts collants. En outre, suite à la mise en œuvre de ces systèmes d'aspiration, une autolaveuse est généralement utilisée, mais elle produit une importante quantité d'effluents.

Finalement, pour les tâches fortement adhérentes, une intervention humaine est nécessaire avec des opérations pénibles et fastidieuses de lavage à l'aide de lingettes ou de raclage.

Parmi les documents de l'art antérieur qui décrivent l'utilisation d'un solvant organique, on peut citer le document FR-A1-2 957 929 [5].

Ce document concerne un procédé de traitement d'une surface solide, notamment un procédé de traitement antisalissure adapté au traitement à titre curatif et/ou à titre préventif d'une surface solide. Ce procédé a notamment pour but l'élimination et/ou la prévention de graffitis et tags.

Selon ce procédé, on applique sur la surface une composition comprenant au moins un ester d'un acide carboxylique qui est un ester dit ester d'acide impair. Cette composition peut se présenter sous la forme d'une microémulsion.

Il n'y a aucune mention, ni aucune suggestion que cette composition puisse se présenter sous la forme d'un gel.

Parmi les documents de l'art antérieur qui décrivent l'utilisation d'un solvant organique, sous la forme d'un gel, on peut citer le document WO-A1-99/09134 [3].

Ce document concerne une composition de nettoyage pour éliminer les composés à longue chaîne tels que le bitume, le goudron, la cire et la gomme à mâcher qui comprend une matrice de gel inerte à l'intérieur de laquelle est enfermé un solvant liquide nonaqueux dans lequel le composé à longue chaîne est soluble.

La matrice du gel est formée par exemple par une silice ou une argile, mais pas par une alumine.

Le solvant peut être choisi parmi les hydrocarbures saturés et insaturés, les alcools, les glycols, les aldéhydes, les cétones, les éthers, les terpènes, les phtalates, les esters, ou les hydrocarbures halogénés.

Le gel de ce document n'est pas un gel que l'on peut qualifier de gel aspirable.

En outre, dans ce document, il n'y a aucune description du procédé qui est utilisé pour appliquer ou mettre en œuvre le gel.

Le seul exemple donné dans ce document concerne l'élimination de gomme à mâcher dont la composition est très éloignée de celle des couches de surface contaminées qui sont constituées généralement par une résine époxy ou une peinture, et de celle des tâches de matériau organique contaminé, qui sont constituées généralement par de l'huile ou du bitume contaminé.

En outre les composés à longue chaîne, par exemple la gomme à mâcher, éliminés dans ce document ne sont pas contaminés par des espèces contaminantes, par exemple par des espèces contaminantes radioactives, et ne contiennent donc pas de telles espèces.

Finalement, il n'y a aucune mention ni aucune suggestion dans ce document que le gel qui y est décrit puisse être utilisé pour résoudre le problème spécifique de l'élimination d'une contamination, telle qu'une contamination radioactive, contenue dans une couche d'un matériau organique.

Par ailleurs, dans le cadre de la décontamination nucléaire, des formulations gélifiées qui permettent de s'affranchir des problèmes liés au caractère pulvérulent du déchet sec, et d'accroître l'efficacité du procédé mettant en œuvre un gel ont fait l'objet des documents FR-A1-2 827 530 [1] et FR-A1-2 891470 [2].

Ces documents décrivent des gels colloïdaux inorganiques dits « gels aspirables », spécifiquement formulés pour être pulvérisés, puis pour sécher en se fracturant, tout en piégeant et confinant la contamination radioactive sous forme de paillettes nonpulvérulentes, aspirables, et directement conditionnables et stockables.

Le document [1] décrit un gel constitué d'une solution colloïdale comprenant un agent viscosant inorganique, généralement de la silice ou de l'alumine, un agent actif de traitement qui est par exemple un acide ou une base inorganique telle que la soude ou la potasse, et éventuellement un agent oxydant ayant un potentiel normal d'oxydo-

réduction $E_0$ supérieur à 1,4 V en milieu acide fort tel que Ce(IV), Co(III), ou Ag(II).

Le document [2] décrit un gel constitué d'une solution colloïdale comprenant un agent viscosant inorganique, généralement de la silice ou de l'alumine, un tensio-actif, un acide ou une base inorganique, éventuellement un agent oxydant ayant un potentiel normal d'oxydoréduction $E_0$ supérieur à 1,4 V en milieu acide fort tel que Ce(IV), Co(III), ou Ag(II).

Ces gels colloïdaux inorganiques, du fait des différents constituants entrant dans leur composition ont une rhéologie qui permet leur pulvérisation sur une surface contaminée, puis leur adhésion à cette surface, même verticale, sans couler.

Cela permet ainsi un contact prolongé entre le contaminant et l'agent actif de décontamination, sans que les propriétés mécaniques du substrat ne soient altérées.

Suite à sa pulvérisation, le gel sèche, se fracture, et produit des résidus secs, appelés « paillettes », adhérant au substrat et qui sont par la suite évacués par brossage ou aspiration pour être directement conditionnés.

Les procédés de décontamination qui mettent en œuvre ces gels aspirables sont donc des procédés de décontamination par voie sèche, ne générant aucun effluent liquide et peu de résidus solides secs. En effet, ces résidus solides secs ne représentent en moyenne qu'un quart de la masse de gel initialement pulvérisée. De plus, ces procédés limitent le temps d'exposition des opérateurs à la contamination radioactive, du fait de leur mise en œuvre facile par pulvérisation puis aspiration des résidus secs, et du fait que la présence de l'opérateur n'est pas requise pendant le séchage du gel.

Les gels décrits dans les documents [1] et [2] sont cependant spécifiquement destinés à l'élimination d'une contamination radioactive, qui se trouve en surface d'un substrat, qu'il s'agisse d'un substrat organique ou autre. Cette contamination radioactive n'est pas contenue dans une couche d'un matériau organique.

Les gels de ces documents ne sont, en aucune manière, adaptés spécifiquement à l'élimination d'une contamination, par exemple d'une contamination radioactive, contenue dans une couche d'un matériau organique, ou même susceptibles d'être adaptés à l'élimination d'une contamination, par exemple d'une contamination radioactive, contenue dans une couche d'un matériau organique.

Il n'y a aucune mention ni aucune suggestion dans les documents [1] et [2] que les gels de ces documents puissent permettre de résoudre le problème extrêmement spécifique de l'élimination d'une contamination, par exemple d'une contamination radioactive, contenue dans une couche d'un matériau organique, intégrée dans une matrice organique, qui est un problème totalement différent du problème de l'élimination d'une contamination, par exemple d'une contamination radioactive, en surface.

Les inventeurs ont mis en évidence que les gels aspirables décrits dans les documents [1] et [2], bien qu'ils soient utilisés depuis quelques années dans le domaine de la décontamination nucléaire de surface, sur des surfaces en des matériaux tels que les aciers, comme l'acier inoxydable, l'aluminium ou le plomb, n'étaient pas du tout efficaces lorsqu'il s'agissait d'éliminer une contamination, par exemple une contamination radioactive, contenue dans une couche d'un matériau organique, intégrée dans une matrice organique, autrement dit lorsqu'il s'agissait de décontaminer des matrices organiques de type peintures murales ou tâches de bitume.

Les documents FR-A1-2962046 et WO-A1-2012/001046 [6] concernent un gel de décontamination biologique « aspirable » et un procédé de décontamination biologique de surfaces utilisant ce gel.

Ce gel est constitué par une solution colloïdale comprenant au moins un agent viscosant inorganique, au moins un agent de décontamination biologique, au moins un polymère super-absorbant, au moins un agent tensio-actif, et le reste de solvant.

Les documents FR-A1-3003763 et WO-A1-2014/154818 [7] concernent un gel alcalin oxydant de décontamination biologique « aspirable » et un procédé de décontamination biologique de surfaces utilisant ce gel.

Ce gel est constitué par une solution colloïdale comprenant au moins un agent viscosant inorganique, un agent actif de décontamination biologique constitué par la combinaison d'une base minérale spécifique, telle que la soude, et d'un agent oxydant stable en milieu basique spécifique, tel que l'hypochlorite de sodium, éventuellement un agent tensio-actif, et le reste de solvant. En outre, ce gel ne contient pas de polymère super-absorbant.

Les gels des documents [6] et [7] sont cependant spécifiquement destinés à la décontamination biologique de surfaces notamment à la décontamination dite postévénementielle de surfaces. Cette contamination biologique, se trouve en surface d'un substrat, qu'il s'agisse d'un substrat organique ou autre. Cette contamination biologique n'est pas contenue dans une couche en un matériau organique.

Les gels de ces documents ne sont, en aucune manière, adaptés spécifiquement à l'élimination d'une contamination, telle qu'une contamination radioactive, contenue dans une couche d'un matériau organique, ou même susceptibles d'être adaptés à l'élimination d'une contamination, telle qu'une contamination radioactive, contenue dans une couche d'un matériau organique.

Il n'y a aucune mention ni aucune suggestion dans les documents [6] et [7] que les gels de ces documents puissent permettre de résoudre le problème extrêmement spécifique de l'élimination d'une contamination, telle qu'une contamination radioactive, contenue dans une couche en un matériau organique, intégrée dans une matrice organique, qui est un problème totalement différent du problème de l'élimination d'une contamination biologique, en surface.

Le document FR-A1-3 027 310 [4] concerne un gel aspirable pour éliminer les graffitis et un procédé pour éliminer les graffitis.

Ce gel est constitué par une solution colloïdale comprenant un agent viscosant organique, un ou plusieurs solvants organiques choisis notamment parmi les acétates d'alkyle, éventuellement un agent tensio-actif, et éventuellement au moins un colorant et/ou pigment.

Le gel décrit dans le document [4] est cependant spécifiquement destiné à l'élimination d'un graffiti ne contenant aucune contamination, par exemple aucune contamination radioactive.

Le gel de ce document n'est, en aucune manière, adapté à l'élimination d'une contamination, par exemple d'une contamination radioactive, contenue dans une couche d'un matériau organique, ou même susceptible d'être adapté à l'élimination d'une contamination, telle qu'une contamination radioactive, contenue dans une couche en un matériau organique.

Il n'y a aucune mention ni aucune suggestion dans le document [4], que le gel de ce document puisse permettre de résoudre le problème extrêmement spécifique de l'élimination d'une contamination, telle qu'une contamination radioactive, contenue dans une couche en un matériau organique, intégrée dans une matrice organique, qui est un problème totalement différent du problème de l'élimination des graffitis.

Il existe donc au regard de ce qui précède, un besoin pour un gel aspirable et un procédé pour éliminer une contamination, par exemple une contamination radioactive, contenue dans une couche de surface en un matériau organique, intégrée dans une matrice organique.

Autrement dit, il existe un besoin pour des formulations de gels aspirables qui puissent décontaminer des surfaces composées de matières organiques, par exemple des surfaces composées de peinture ou de résine époxy, ou des surfaces souillées par des matières organiques contaminées, telles que tâches de bitume ou de l'huile que l'on peut rencontrer notamment, mais pas seulement, dans les installations nucléaires.

Le but de la présente invention est de fournir un gel aspirable qui réponde entre autres à ces besoins.

Le but de la présente invention est encore de fournir un gel aspirable qui ne présente pas les inconvénients, défauts et désavantages des gels de l'art antérieur et qui résolve les problèmes des gels de l'art antérieur, tels que les gels des documents [1] et [2].

## EXPOSÉ DE L'INVENTION

Ce but, et d'autres encore sont atteints, conformément à l'invention, par un gel aspirable pour éliminer une espèce contaminante, par exemple une espèce contaminante radioactive, contenue dans une couche constituée par un matériau organique, en surface d'un substrat solide, constitué par une solution colloïdale comprenant, de préférence constituée par :

- 1% à 25% en masse, de préférence 5% à 20% en masse, par exemple 10% en masse, par rapport à la masse totale du gel, d'au moins un agent viscosant inorganique ;
- 13% à 99% en masse, de préférence 80% à 95% en masse, par exemple 90% en masse, par rapport à la masse totale du gel, d'un ou plusieurs solvant(s) organique(s) choisi(s) parmi les terpènes;
- éventuellement, de 1% à 40% en masse, de préférence de 10 à 20 % en masse par rapport à la masse totale du gel, d'éthanol;
- éventuellement, de 0,01% à 10% en masse, par rapport à la masse totale du gel, d'au moins un colorant et/ou pigment;
- éventuellement, de 0,1% à 2% en masse, par rapport à la masse totale du gel, d'au moins un agent tensio-actif;
- éventuellement, de 0,1% à 10 % en masse, de préférence de 1% à 5 % en masse, par rapport à la masse totale du gel, d'au moins un agent extractant de l'espèce contaminante, par exemple d'au moins un agent extractant des radionucléides, de préférence choisi parmi les zéolithes et les argiles.

La somme des pourcentages en masse de tous les composants, constituants du gel est bien évidemment de 100% en masse.

Le gel selon l'invention n'a jamais été décrit dans l'art antérieur.

Le terme « gel » est parfaitement clair pour l'homme du métier et il a une signification largement acceptée.

Toutefois, généralement, on peut considérer qu'un gel peut posséder une viscosité supérieure ou égale à 0,1 Pa.s.

Le gel selon l'invention est tout d'abord fondamentalement défini en ce qu'il est un gel dit « gel aspirable ».

Le terme « gel aspirable », comme on l'a déjà mentionné plus haut est un terme couramment usité dans ce domaine de la technique, il a une signification largement acceptée.

Un gel aspirable est intrinsèquement différent d'un gel qui n'est pas aspirable.

Le gel selon l'invention est ensuite caractérisé par le fait qu'il contient un ou plusieurs solvant(s) organique(s) spécifique(s) choisi(s) parmi les terpènes et leurs mélanges.

Ce(s) solvants, choisi(s) parmi les terpènes, constituent le principe actif du gel selon l'invention. Ils permettent la dissolution des matériaux organique de la couche de surface contaminée.

Grâce aux propriétés intrinsèques du ou des solvant(s) spécifique(s) du gel selon l'invention, qui sont des terpènes, le gel selon l'invention permet de :

- dissoudre complètement une matrice organique contaminée, par exemple sous la forme de tâches, qui se retrouve alors incorporée, au même titre que la contamination, dans le déchet solide final, à savoir le gel après séchage qui se présente sous la forme de paillettes aspirables.
- attaquer par dissolution une couche organique de surface contaminée par exemple sur quelques microns et permettre l'incorporation de la couche dissoute et des contaminants présents au sein du gel et donc dans le déchet solide final à savoir le gel après séchage.

Ce(s) solvant(s) du gel selon l'invention, choisi (s) parmi les terpènes est (sont) peu (voire non) toxique(s), nocif(s).

En d'autres termes, selon l'invention, on a pris soin que le(s) solvant(s) du gel soi(en)t spécifiquement choisi(s) parmi les solvants les moins toxiques, et les moins nocifs, voire non toxiques, et non nocifs, afin vue de protéger les opérateurs qui mettent en œuvre le gel selon l'invention.

Il s'agit là d'une autre caractéristique qui différencie fondamentalement le gel selon l'invention de nombre de gels de l'art antérieur dans lesquels des solvants, par exemple des essences, toxiques ou nocives, sont mis en œuvre.

Ce(s) solvant(s) terpènes du gel selon l'invention est (sont) en outre des solvants qui dégagent une odeur qui n'est pas ou peu nauséabonde, ou désagréable.

En d'autres termes, on a pris le plus grand soin que les solvants du gel selon l'invention soient choisis parmi les solvants dont l'odeur est la moins nauséabonde, la moins désagréable, voire pas du tout nauséabonde ou désagréable.

Autrement dit, les solvants du gel selon l'invention sont choisis parmi les solvants qui présentent une « puanteur » limitée voire nulle.

Le solvant ou le mélange de solvant(s) terpènes du gel selon l'invention possède en outre généralement une volatilité compatible avec une bonne durée de séchage du gel, c'est-à-dire une volatilité qui garantit une vitesse de séchage pas trop élevée, et donc une durée de séchage suffisante pour assurer une dissolution au moins partielle du matériau organique de la couche, une absorption de de la contamination, par exemple une durée de séchage d'environ 20 heures.

La présence d'éthanol dans le gel permet, si on le souhaite, de diminuer la durée de séchage par exemple jusqu'à environ 5 heures.

La plupart des terpènes mentionnés plus haut ont une volatilité faible, sont peu volatils et permettent donc, lorsqu'ils sont utilisés seuls dans le gel selon l'invention d'obtenir une durée de séchage suffisante, par exemple une durée de séchage d'environ 20 heures.

De nouveau, la présence d'éthanol dans le gel, en combinaison avec un ou plusieurs terpènes à volatilité faible, permet, si on le souhaite, de diminuer la durée de séchage jusqu'à environ 5 heures.

Cependant, certains parmi les terpènes mentionnés plus haut ont une volatilité élevée, donnent des gels qui sèchent trop vite, et ne permettent pas lorsqu'ils sont utilisés seuls dans le gel selon l'invention d'obtenir une durée de séchage suffisante, c'est par exemple le cas de l'ocimène.

Ces solvants terpènes qui ont une volatilité élevée tels que l'ocimène sont donc généralement utilisés en combinaison, en mélange avec un autre solvant terpène (tel que le limonène) qui a une volatilité faible afin d'obtenir une durée de séchage suffisante.

C'est justement la combinaison d'un tel solvant terpène à volatilité élevée avec un autre solvant terpène de volatilité inférieure qui permet de « freiner » le séchage du gel et d'atteindre une bonne durée de séchage, une durée de séchage suffisante.

De la même manière, on fait généralement en sorte que la volatilité du solvant ou du mélange de solvants terpène éventuellement en combinaison avec de l'éthanol, soit telle que le gel ne sèche pas trop lentement et que sa durée de séchage ne soit pas trop longue et n'excède pas, par exemple, 8 heures.

L'homme du métier peut facilement identifier, parmi les solvants du gel selon l'invention, choisis parmi les terpènes, mentionnés plus haut, les solvants ayant une volatilité faible, et les solvants ayant une volatilité élevée afin de définir une formulation possédant une durée de séchage qui ne soit pas trop longue, et n'excédant pas, par exemple, 8 heures.

L'homme du métier sait par ailleurs que l'éthanol est un solvant qui possède une volatilité élevée.

Un gel préféré selon l'invention est constitué par une solution colloïdale comprenant, de préférence constituée par, de 35% à 98 % en masse, de préférence 60 à 85% en masse, par exemple 70% en masse, par rapport à la masse totale du gel, d'un ou plusieurs terpène(s) choisis parmi, par exemple, le d-limonène, le l-limonène, l'alpha-pinène ou la béta-pinène, de 1% à 25% en masse, de préférence 5% à 20% en masse, par exemple 10% en masse, par rapport à la masse totale du gel, d'un agent viscosant inorganique, de préférence choisi parmi les alumines, et de 1% à 40% en masse, de préférence 10% à 20% en masse, par exemple 19 à 20% en masse, par rapport à la masse totale du gel, d'éthanol.

De manière étonnante, et bien que les solvants organiques du gel selon l'invention, qui sont des terpènes, soient choisis parmi les solvants peu (voire non) toxique(s), nocif(s), ces solvants seuls ou en mélange présentent cependant une efficacité élevée pour dissoudre le matériau de la couche organique contenant la contamination, par exemple la contamination radioactive, quelle que soit ce matériau, par exemple peinture résine ou autre.

En d'autres termes, le solvant du gel selon l'invention qui est choisi parmi les terpènes, est relativement peu toxique et possède des propriétés dissolvantes fortes vis-à-vis des matériaux organiques mais également des propriétés de dégraissage.

Les terpènes peuvent être notamment choisis parmi les hydrocarbures terpéniques, les composés terpéniques oxygénés, et les isomères, notamment les isomères optiques, de ceux-ci.

Le ou les terpène(s) du gel est (sont) également choisi(s) en fonction de la nature du matériau organique qui constitue la couche contaminée de façon à permettre la dissolution la plus efficace de ce matériau.

Par terpènes, on entend également les isomères, notamment les isomères optiques de ceux-ci.

Parmi les terpènes, on peut citer en particulier, l'ocimène, le $\alpha$-pinène, le $\beta$-pinène, le limonène, le menthol, la menthone, le terpinéol, l'isobornéol, le camphre, le nérol, le citronellal, le citronellol, la myrcène, le myrcénol, le linalol, le géraniol, et les isomères notamment les isomères optiques de ceux-ci.

Le gel selon l'invention comprend en tant que solvant organique choisi parmi les terpènes, de préférence en tant que seul solvant organique choisi parmi les terpènes, du d-limonène.

En effet, le d-limonène possède, parmi tous les terpènes, le meilleur pouvoir de solubilisation vis-à-vis des matériaux organiques, notamment vis-à-vis des bitumes.

Un gel particulièrement préféré selon l'invention comprend de 35% à 94% en masse, de préférence de 65% à 83% en masse, encore de préférence de 70% à 80% en masse, par exemple 67% en masse, par rapport à la masse totale du gel, de d-limonène, et de 1% à 40% en masse, de préférence de 10% à 20% en masse, par exemple de 19% à 20% en masse, par rapport à la masse totale du gel, d'éthanol qui permet d'ajuster la durée de séchage.

Le gel selon l'invention répond aux besoins énumérés plus haut, il permet notamment, tout en étant aspirable, d'éliminer une contamination, par exemple une contamination radioactive, contenue dans une couche d'un matériau organique.

En particulier, le gel selon l'invention permet la décontamination efficace de surfaces composées de matières organiques, du type peinture ou résine époxy ou bien de surfaces souillées par des matières organiques contaminées comme des tâches de bitume ou d''huile.

Au contraire des gels de l'art antérieur, le gel selon l'invention grâce aux solvants spécifiques qu'il contient, assure la décontamination, par exemple la décontamination radiologique, par dissolution complète ou partielle du matériau organique contenant les contaminants, par exemple les contaminants radioactifs, et l'incorporation du matériau organique dissout contenant les contaminants, par exemple les contaminants radioactifs, au sein du gel.

Le gel selon l'invention possède la même efficacité, que la couche traitée soit une couche de surface contaminée d'un substrat solide constituée par un matériau organique contaminé, ou bien que la couche traitée soit une couche constituée par un matériau organique contaminé telle qu'une couche formant un revêtement sur une surface d'un substrat, ou bien encore que la couche traitée soit une couche constituée par un matériau organique contaminé, se trouvant sur une surface d'un substrat, cette couche se présentant notamment sous la forme d'une tâche de matériau organique contaminé souillant ladite surface, par exemple une tâche d'huile ou de bitume ou de graisse contaminé qui souille ladite surface.

Dans ce dernier cas où la couche traitée se présente notamment sous la forme d'une tâche de matériau organique contaminée souillant une surface, le gel selon l'invention possède une excellente efficacité quel que soit le matériau de cette surface et quel que soit l'état de surface de ladite surface, que cette surface soit lisse, rugueuse, dense ou poreuse. Les exemples fournis plus loin montrent que le gel selon l'invention est tout aussi efficace pour décontaminer une surface dense en résine époxy, qu'une surface poreuse en béton, en éliminant de cette surface une tache de bitume contaminée.

Le gel selon l'invention permet une migration des contaminants, de la contamination, par exemple de la contamination radioactive, présents dans couche organique contaminée jusque dans le gel et, par voie de conséquence, jusque dans le déchet solide final constitué par le gel sec, afin de décontaminer ladite couche organique.

Le gel selon l'invention, comme on l'a déjà indiqué plus haut, est un gel aspirable qui possède toutes les propriétés avantageuses -mentionnées plus haut- inhérentes aux gels dits gels aspirables tels que les gels des documents [1], [2], [6], [7] et [4] à la différence fondamentale toutefois que, avec le gel selon l'invention, on élimine une contamination, telle qu'une contamination radioactive, contenue dans une couche de surface en un matériau organique et que la composition du gel est donc adaptée en conséquence.

Comme on l'a indiqué plus haut, les gels de ces documents [1], [2], [6], [7], sont des gels aqueux spécifiquement conçus pour l'élimination d'une contamination radioactive ou biologique se trouvant à la surface d'un substrat, et dont les solvants et l'agent actif de décontamination sont totalement différents de ceux du gel selon l'invention.

Il n'y a aucune indication dans les documents [1], [2], [6], et [7], qui pourrait conduire l'homme du métier à modifier d'une manière aussi conséquente les gels de ces documents afin de les utiliser pour éliminer une contamination, par exemple une contamination radioactive, contenue dans une couche de surface en un matériau organique.

De la même manière, le gel du document [4] est un gel spécifiquement conçu pour l'élimination de graffitis ne contenant pas de contamination, notamment pas de contamination radioactive, en surface d'un substrat.

Le gel du document [4] a simplement une action de dissolution du graffiti et non une action de transfert, migration dans le gel, d'une contamination, par exemple d'une contamination radioactive, contenue dans le gel.

Il n'y a aucune indication dans le document [4] qui pourrait conduire l'homme du métier à modifier le gel de ce document afin de l'utiliser pour une contamination, par exemple une contamination radioactive, contenue dans une couche de surface en un matériau organique.

Le gel selon l'invention est un gel colloïdal dont le principe actif permet la dissolution totale ou partielle du matériau organique, et dont la rhéologie est adaptée à l'application, de préférence par pulvérisation sur les surfaces à traiter.

C'est là un des avantages du gel selon l'invention que de pouvoir être appliqué très aisément, par pulvérisation.

Le gel selon l'invention sèche progressivement, prolongeant le temps de contact entre l'actif décapant, dissolvant, à savoir le solvant et le matériau organique, par exemple la peinture, et forme des paillettes qui se détachent aisément de la surface par brossage/aspiration -d'où le nom de gel aspirable- emportant ainsi la contamination, par exemple la contamination radioactive, et le matériau organique dissout. Dans le cas où la couche en matériau organique se présente sous la forme d'une tâche ou de tâches discrètes de matériau organique contaminées souillant la surface d'un substrat solide, par exemple sous la forme de tâches d'huile ou de bitume contaminées qui souille la surface du substrat solide, cela est réalisé sans que le matériau du substrat solide ne soit altéré.

L'opérateur de nettoyage peut ainsi laisser le gel agir sur les surfaces à traiter tout en allant traiter d'autres surfaces, sans avoir à être présent physiquement lors du séchage, ou à frotter laborieusement la surface à l'aide d'un solvant.

En résumé, les gels selon l'invention répondent donc à l'ensemble des besoins mentionnés plus haut, et ils présentent toutes les propriétés avantageuses connues des gels dits gels « aspirables ».

Autrement dit, la combinaison -que l'on peut qualifier de synergique- d'un ou plusieurs agent(s) viscosant(s) inorganique(s) avec le solvant spécifique du gel selon l'invention choisi parmi les terpènes et leurs mélanges, permet d'obtenir un gel possédant des propriétés rhéologiques, ainsi que des propriétés de dissolution du matériau organique, d'absorption, de migration de la contamination, par exemple de la contamination radioactive, dans le gel, et de séchage excellentes, le gel sec étant en outre facilement aspirable.

Le gel selon l'invention, bien qu'il contienne un agent viscosant généralement exclusivement inorganique, minéral, sans agent viscosant, organique, peut être qualifié de gel organique.

En effet, la teneur en matières organiques du gel selon l'invention est élevée, au moins égale à 70% en masse, par exemple égale à 90% en masse, car il contient au moins 70% en masse, par exemple 90% en masse de solvants organiques.

Le gel selon l'invention est une solution colloïdale, ce qui signifie que le gel selon l'invention contient des particules solides inorganiques, minérales, d'agent viscosant dont les particules élémentaires, primaires, ont une taille généralement de 2 à 200 nm. Ces particules solides, minérales, inorganiques jouent le rôle de viscosant pour permettre à la solution de se gélifier et ainsi d'adhérer à la surface à traiter, quelle que soit sa géométrie, sa forme, sa taille, et où que se trouvent les couches à traiter. Le gel selon l'invention comprend au moins un agent viscosant inorganique constitué par une ou plusieurs alumines, choisies parmi les alumines pyrogénées

Avantageusement, l'agent viscosant inorganique peut être choisi parmi les oxydes de métaux tels que les alumines, les oxydes de metalloïdes tels que les silices, les hydroxydes de métaux, les hydroxydes de metalloïdes, les oxyhydroxydes de métaux, les oxyhydroxydes de métalloïdes, les aluminosilicates, les argiles telles que la smectite, et leurs mélanges.

En particulier, l'agent viscosant inorganique peut être choisi parmi les alumines ($Al_2O_3$) et les silices ($SiO_2$).

L'agent viscosant inorganique peut ne comprendre qu'une seule silice ou alumine ou un mélange de celles-ci, à savoir un mélange de deux silices différentes ou plus (mélange $SiO_2/SiO_2$), un mélange de deux alumines différentes ou plus (mélange $Al_2O_3/Al_2O_3$), ou encore un mélange d'une ou plusieurs silice(s) avec une ou plusieurs alumine(s) (mélange $SiO_2/Al_2O_3$).

Avantageusement, l'agent viscosant inorganique peut être choisi parmi les silices pyrogénées, les silices précipitées, les silices hydrophiles, les silices hydrophobes, les silices acides, les silices basiques comme la silice Tixosil[®] 73, commercialisée par la société Rhodia, et leurs mélanges.

Parmi les silices acides, on peut notamment citer les silices pyrogénées ou fumées de silice "Cab-O-Sil"[®] M5, H5 ou EH5, commercialisées par la société CABOT, et les silices pyrogénées commercialisées par la société EVONIK INDUSTRIES sous l'appellation AEROSIL[®].

Parmi ces silices pyrogénées, on préférera encore la silice AEROSIL® 380 d'une surface spécifique de 380 m$^2$/g qui offre les propriétés viscosantes maximales pour une charge minérale minimale.

La silice utilisée peut aussi être une silice dite précipitée obtenue par exemple par voie humide par mélange d'une solution de silicate de soude et d'un acide. Les silices précipitées préférées sont commercialisées par la société EVONIK INDUSTRIES sous le nom de SIPERNAT® 22 LS et FK 310 ou encore par la société RHODIA sous le nom de TIXOSIL® 331, cette dernière est une silice précipitée dont la surface spécifique moyenne est comprise entre 170 et 200 m$^2$/g.

Un agent viscosant particulièrement préféré est choisi parmi les alumines pyrogénées. En effet, il s'est avéré que la combinaison d'une ou plusieurs alumines avec le solvant spécifique du gel selon l'invention choisi parmi les terpènes et leurs mélanges permettait d'obtenir un gel possédant des propriétés rhéologiques, ainsi que des propriétés de dissolution du matériau organique, d'absorption, de migration de la contamination, par exemple de la contamination radioactive, dans le gel, et de séchage encore meilleures, le gel sec étant en outre facilement aspirable.

En particulier, les propriétés rhéologiques du gel sont meilleures lorsque le gel comprend une ou plusieurs alumines pyrogénées en tant qu'agent viscosant inorganique, plutôt qu'une silice ou une argile, comme dans le gel du document [3].

Les alumines peuvent être choisies parmi les alumines calcinées, les alumines calcinées broyées, les alumines pyrogénées, et leurs mélanges.

Les alumines pyrogénées sont particulièrement préférées car les propriétés du gel mentionnées plus haut, et notamment les propriétés rhéologiques, sont encore meilleures avec ces alumines pyrogénées, notamment lorsque ces alumines pyrogénées possèdent une granulométrie fine, à savoir généralement de 10 nm à 100 nm.

A titre d'exemple, on peut citer le produit vendu par la société EVONIK INDUSTRIES sous la désignation commerciale « Aeroxide® Alu C » qui est de l'alumine fine pyrogénée.

De manière avantageuse, selon l'invention, l'agent viscosant inorganique est constitué par une ou plusieurs alumine(s), représentant généralement de 1% à 25% en masse, et de préférence de 5% à 25% en masse par rapport à la masse totale du gel.

Dans ce cas, la ou les alumine(s) est (sont) de préférence encore à une concentration de 5% à 20% en masse, mieux de 7% à 15% en masse, par exemple 10% à 14% en masse, par rapport à la masse totale du gel pour assurer un séchage du gel à température comprise entre 20°C et 50°C et à une humidité relative comprise entre 20% et 60% en moyenne en 30 minutes à 24 heures.

La nature de l'agent viscosant minéral, notamment lorsqu'il est constitué d'une ou plusieurs alumine(s), influence de manière inattendue le séchage du gel selon l'invention et la granulométrie du résidu obtenu.

En effet, le gel sec se présente sous la forme de particules de taille contrôlée, plus précisément de paillettes solides millimétriques, dont la taille va généralement de 1 à 10 mm, de préférence de 2 à 5 mm grâce notamment aux compositions précitées de la présente invention, en particulier lorsque l'agent viscosant est constitué par une ou plusieurs alumine(s).

Précisons que la taille des particules correspond généralement à leur plus grande dimension.

En d'autres termes, les particules solides minérales du gel selon l'invention, par exemple de type silice ou alumine, outre leur rôle de viscosant, jouent également un rôle fondamental lors du séchage du gel car elles assurent la fracturation du gel pour aboutir à un déchet sec sous forme de paillettes.

Un gel particulièrement préféré selon l'invention est constitué par une solution colloïdale comprenant, de préférence constituée par :

- 1% à 25% en masse, de préférence 5% à 25% en masse, de préférence encore 5% à 20% en masse, mieux 7% à 15% en masse, par exemple 10% à 14% en masse, par rapport à la masse totale du gel, d'au moins une alumine, de préférence d'au moins une alumine pyrogénée, de préférence encore d'au moins une alumine pyrogénée possédant une granulométrie fine;
- 35% à 94% en masse, de préférence de 65% à 83% en masse, de préférence encore de 70% à 80% en masse, par exemple 67% en masse par rapport à la masse totale du gel, de d-limonène;
- de 1% à 40% en masse, de préférence de 10 à 20% en masse, par exemple 19% à 20% en masse, par rapport à la masse totale du gel, d'éthanol.

De nouveau, bien évidemment, la somme des pourcentages en masse à tous les composants, constituants du gel est de 100% en masse.

Un tel gel possède de manière inattendue une combinaison particulièrement avantageuse de propriétés, à savoir une excellente efficacité, notamment un excellent pouvoir de solubilisation des matériaux organiques, due essentiellement au d-limonène, et d'excellentes propriétés rhéologiques, de séchage, et de forme du résidus sec dues à l'alumine notamment pyrogénée.

L'addition d'éthanol permet en outre d'ajuster à volonté la durée de séchage.

Le gel selon l'invention peut contenir en outre, éventuellement, au moins un colorant et/ou au moins un pigment.

Avantageusement, le pigment est un pigment minéral. On pourra à cet égard se reporter au document WO-A1-2014/154817.

Il n'existe aucune limitation quant au pigment minéral qui est incorporé dans le gel de décontamination selon l'invention.

Généralement, le pigment minéral est choisi parmi les pigments minéraux qui sont stables dans le gel.

Par pigment stable, on entend généralement que le pigment ne présente pas de changement stable de sa couleur dans le temps, lors du stockage du gel pendant une durée minimale de 6 mois.

Il n'y a aucune limitation quant à la couleur de ce pigment, qui est généralement la couleur qu'il va communiquer au gel. Ce pigment peut être de couleur noire, rouge, bleue, verte, jaune, orange, violette, marron, etc., et même blanche.

Généralement, le gel a donc une couleur identique à la couleur du pigment qu'il contient. Il est toutefois possible que le gel possède une couleur qui diffère de la couleur du pigment qu'il contient mais cela n'est pas recherché.

Le pigment, notamment lorsqu'il est blanc, est généralement différent de l'agent viscosant inorganique.

Avantageusement, le pigment minéral est choisi de telle sorte qu'il donne au gel (c'est-à-dire au gel à l'état humide, avant séchage) une couleur différente de la couleur d'une surface à décontaminer sur laquelle le gel est appliqué.

Avantageusement, le pigment minéral est un pigment micronisé, et la taille moyenne des particules du pigment minéral peut être de 0,05 à 5 $\mu$m, de préférence de 0,1 à 1 $\mu$m.

Le fait que le pigment soit micronisé permet d'éviter qu'il ne modifie la rhéologie et l'aptitude à la pulvérisation du gel (« pulvérisabilité ») car le pigment a alors la même taille micrométrique qui est généralement celle de l'agent viscosant inorganique, tel que les agrégats d'alumine.

Avantageusement, le pigment minéral est choisi parmi les oxydes de métal (métaux) et/ou de métalloïde(s), les hydroxydes de métal (métaux) et/ou de métalloïde(s), les oxyhydroxydes de métal (métaux) et/ou de métalloïde(s), les ferrocyanures et ferricyanures de métal (métaux), les aluminates de métal (métaux), et leurs mélanges.

De préférence, le pigment minéral est choisi parmi les oxydes de fer, de préférence micronisés, et leurs mélanges.

Les oxydes de fer peuvent avoir différentes couleurs, ils peuvent être par exemple jaunes, rouges, violets, oranges, marrons, ou noirs.

En effet, les pigments d'oxyde de fer sont reconnus pour avoir un bon pouvoir couvrant et une grande résistance aux acides et aux bases.

Pour une incorporation dans un gel de décontamination, les oxydes de fer présentent les meilleures performances en termes de stabilité et de pouvoir colorant. Ainsi, une teneur en oxyde de fer de 0,1%, voire 0,01% en masse suffit à fortement colorer le gel sans en modifier les propriétés.

Comme on l'a déjà indiqué plus haut, le fait que le pigment d'oxyde de fer soit de préférence micronisé permet d'éviter qu'il ne modifie la rhéologie et l'aptitude à la pulvérisation du gel (« pulvérisabilité ») car le pigment a alors une taille micrométrique, à savoir une taille qui est généralement celle de l'agent viscosant inorganique, tel que les agrégats d'alumine.

Des oxydes de fers micronisés sont disponibles auprès de la société Rockwood® sous la dénomination commerciale Ferroxide®.

On peut citer entre autres le Ferroxide® 212 M qui est un oxyde de fer rouge micronisé avec une taille moyenne des particules de 0,1 $\mu$m et le Ferroxide® 228 M qui est un oxyde de fer rouge micronisé avec une taille moyenne des particules de 0,5 $\mu$m.

En plus et/ou à la place des oxydes de fer, d'autres oxydes ou hydroxydes de métaux ou de métalloïdes colorés peuvent être incorporés dans le gel selon l'invention, en fonction du pH du gel, on peut notamment citer l'oxyde de vanadium ($V_2O_5$) qui est orange, l'oxyde de manganèse ($MnO_2$) qui est noir, l'oxyde de cobalt qui est bleu ou vert, et les oxydes de terres rares. Cependant les oxydes de fer sont préférés pour les raisons précisées plus haut.

Parmi les oxyhydroxydes, on peut citer la goethite, c'est-à-dire l'oxyhydroxyde de fer FeOOH, qui est très colorée.

A titre d'exemple de ferrocyanure de métal, on peut citer, le bleu de Prusse, c'est-à-dire le ferrocyanure ferrique, et à titre d'exemple d'aluminate, on peut citer le bleu de cobalt, c'est-à-dire l'aluminate de cobalt.

L'incorporation dans le gel selon l'invention d'un pigment minéral permet de mieux visualiser le gel humide puis les résidus secs quel que soit le substrat sur lequel est appliqué le gel.

Le gel peut contenir éventuellement, en outre, au moins un agent tensio-actif (à savoir un seul agent tensio-actif ou un mélange d'agents tensio-actifs), de préférence ce ou ces agent(s) tensio-actif(s) est (sont) choisi(s) parmi les agents tensio-actifs non ioniques tels que les copolymères blocs, séquencés comme les copolymères séquencés d'oxyde d'éthylène et d'oxyde de propylène, et les acides gras éthoxylés ; et leurs mélanges.

Pour ce type de gel, les agents tensio-actifs sont de préférence des copolymères blocs commercialisés par la société BASF sous la dénomination PLURONIC®.

Les Pluronics® sont des copolymères séquencés d'oxyde d'éthylène et d'oxyde de propylène.

Ces agents tensio-actifs influencent les propriétés rhéologiques du gel, notamment le caractère thixotropique du produit et son temps de reprise et évitent l'apparition de coulure.

Les agents tensio-actifs permettent, par ailleurs, de maîtriser l'adhésion du déchet sec, et de contrôler la taille des paillettes de résidu sec pour garantir la non-pulvérulence du déchet.

Le gel peut contenir éventuellement, en outre, de 0,1% à 10% en masse, de préférence 1% à 5% en masse, par rapport à la masse totale du gel, d'au moins un agent extractant de l'espèce contaminante, par exemple d'au moins un agent extractant des radionucléides, de préférence choisi parmi les zéolithes et les argiles.

Cet agent extractant éventuel tel qu'une zéolithe ou une argile peut être utilisé dans le cas où l'espèce contaminante est un radionucléide, mais cet agent extractant éventuel peut aussi être utilisé dans la cas d'espèces contaminantes autres que les radionucléides, comme par exemple des métaux, tels que des métaux toxiques ou métaux lourds.

L'invention concerne, en outre, un procédé pour éliminer une espèce contaminante, par exemple une espèce contaminante radioactive, contenue dans une couche constituée par un matériau organique en surface d'un substrat solide, dans lequel on réalise au moins un cycle comprenant les étapes successives suivantes :

a) on applique le gel selon l'invention, tel qu'il a été décrit plus haut, sur ladite couche constituée par un matériau organique;

b) on maintient le gel sur la couche constituée par un matériau organique au moins pendant une durée suffisante pour que le gel dissolve en partie ou en totalité le matériau organique de la couche constituée par un matériau organique, absorbe l'espèce contaminante, par exemple l'espèce contaminante radioactive (pour que l'espèce contaminante migre dans le gel), et pour que le gel sèche et forme un résidu sec et solide non pulvérulent contenant le matériau organique de la couche constituée par un matériau organique qui a été dissout, et l'espèce contaminante, par exemple l'espèce contaminante radioactive;

c) on élimine le résidu sec et solide contenant le matériau organique de la couche organique qui a été dissout, et l'espèce contaminante, par exemple l'espèce contaminante radioactive.

Il n'existe aucune limitation quant à l'espèce contaminante qui peut être éliminée par le procédé selon l'invention, en particulier en ce qui concerne sa forme et sa composition chimique. Ainsi, l'espèce contaminante qui peut être éliminée par le procédé selon l'invention peut être une espèce organique ou inorganique (minérale).

L'espèce contaminante qui peut être éliminée par le procédé selon l'invention peut être une espèce contaminante solide ou liquide.

L'espèce contaminante qui peut être éliminée par le procédé selon l'invention, peut être notamment une espèce contaminante radioactive, et/ou chimiquement toxique, et/ou toxique du fait de sa forme et/ou de sa taille.

L'espèce contaminante toxique du fait de sa forme et/ou de sa taille, peut être une espèce contaminante se présentant sous la forme de particules solides telles que des microparticules, ou des nanoparticules, par exemple sous la forme de fibres telles que des microfibres ou des nanofibres, sous la forme de nanotubes, ou sous la forme de cristaux tels que des nanocristaux.

Ces fibres peuvent former une laine, telle qu'une laine de verre ou une laine dite laine de roche.

L'espèce contaminante toxique peut notamment se présenter sous la forme d'une poussière.

Il est à noter que certaines poussières de composés chimiquement non-toxiques, comme par exemple les poussières de céréales ou de bois sont toxiques du seul fait qu'elles se présentent précisément sous cette forme de poussière.

L'espèce contaminante peut être choisie parmi les métaux et métalloïdes sous forme de métal, de métalloïde, ou ionique, de préférence parmi les métaux dits « métaux lourds », et les métaux et métalloïdes toxiques sous forme de métal, de métalloïde, ou ionique ; les composés de ces métaux et métalloïdes tels que les composés organométalliques, les sels de métaux, les oxydes de métaux, les carbures de métaux, etc. ; les céramiques ; et les verres par exemple sous la forme de laine de verre.

Au sens de l'invention, on entend par métaux dits « métaux lourds » tous les éléments traditionnellement désignés par cette dénomination ainsi que les éléments désignés par la dénomination d'éléments-traces métalliques, ou ETM.

Les métaux dit « métaux lourds », et les métaux et métalloïdes toxiques sont notamment l'antimoine, l'arsenic, le cadmium, le chrome , le cuivre, le plomb, le mercure, le nickel, le sélénium, le tellure, le thallium et l'étain.

L'espèce contaminante peut être notamment de l'amiante.

L'espèce contaminante radioactive peut être tout composé chimique contenant un radionucléide, qu'elle soit sous forme ionique, moléculaire ou particulaire.

Selon une première variante, la couche constituée par un matériau organique contenant une espèce contaminante, par exemple une espèce contaminante radioactive, peut être une couche de surface, d'un substrat solide constitué par ledit (le même) matériau organique (que la couche).

Autrement dit selon cette première variante, la couche de surface fait partie intégrante du substrat.

Cette couche de surface a généralement une épaisseur de 1 à 10 $\mu$m.

Ce matériau organique peut être choisi parmi les peintures, les laques, les polymères organiques, et les résines organiques comme les résines époxy.

Ce substrat solide constitué par un matériau organique peut être un substrat solide massif ou une couche, telle qu'une couche de peinture ou de résine époxy, par exemple une couche de peinture ou de résine époxy formant un revêtement sur une surface d'un substrat.

Ou bien, selon une seconde variante, cette couche constituée par un matériau organique contenant une espèce contaminante, par exemple une espèce contaminante radioactive peut être une couche constituée par un matériau organique contenant une espèce contaminante, par exemple une espèce contaminante radioactive, se trouvant sur une surface d'un substrat solide, cette couche pouvant se presenter sous la forme d'une couche continue, ou pouvant se présenter sous la forme d'une tâche ou de tâches discrètes du matériau organique contenant une espèce contaminante, par exemple une espèce contaminante radioactive.

Dans cette seconde variante, la couche, par exemple la tâche ou les tâches discrètes, du matériau organique contenant une espèce contaminante, par exemple une espèce contaminante radioactive est (sont) totalement dissoute(s) par le gel.

Dans cette seconde variante, le matériau organique (de la couche) peut être choisi parmi les matériaux organiques collants.

Les matériaux organiques collants sont bien connus de l'homme du métier, qui n'a aucune peine à déterminer parmi les matériaux organiques ceux qui sont collants, qui adhérent à une surface sur laquelle ils se trouvent.

Dans la présente, on définit généralement les matériaux organiques collants comme étant des matériaux qui ne peuvent être éliminés d'une surface sur laquelle ils se trouvent par une simple aspiration.

Le matériau organique peut être notamment choisi parmi les huiles telles que les huiles hydrocarbonées, les bitumes, les goudrons et les graisses.

Dans cette seconde variante, le substrat solide peut être un substrat poreux, de préférence un substrat minéral poreux, ou un substrat non poreux.

L'efficacité du gel et du procédé selon l'invention est tout aussi bonne en présence d'une surface non poreuse et/ou non minérale qu'en présence d'une surface poreuse et/ou minérale. Quel que soit le substrat solide (poreux, minéral ou non), la tâche ou les tâches discrètes du matériau organique contenant une espèce contaminante, par exemple une espèce contaminante radioactive est (sont) totalement dissoute(s) par le gel (voir exemples).

Avantageusement, dans cette seconde variante, le substrat est en au moins un matériau choisi parmi les métaux et alliages comme l'acier inoxydable, l'acier galvanisé, ou le zinc ; les aciers peints ; les polymères organiques tels que les matières plastiques ou caoutchoucs comme les poly(chlorure de vinyle)s ou PVC, les polypropylènes ou PP, les polyéthylènes ou PE notamment les polyéthylènes haute densité ou HDPE, les poly(méthacrylate de méthyle)s ou PMMA, les poly(fluorure de vinylidène)s ou PVDF, les polycarbonates ou PC ; les verres ; les matériaux cimentaires comme les pâtes, les ciments, les mortiers et les bétons ; les plâtres ; les briques ; les tuiles ; la terre crue ou cuite ; les pierres naturelles ou artificielles ; les enduits ; la fibre de verre, les fibrociments ; l'asphalte ; le goudron ; l'ardoise ; les matériaux à base de cellulose comme le bois ; et les céramiques.

Le substrat peut être peint ou non.

Avantageusement, le gel est appliqué sur la couche de surface à raison de 100 g à 10000 g, de préférence de 500 g à 5000 g, de préférence encore de 500 à 1500 g de gel par m$^2$ de surface, mieux de 600 à 1000 g de gel par m$^2$ de surface, ce qui correspond généralement à une épaisseur de gel déposé sur la surface de 0,1 mm à 1 cm de préférence de 0,5 mm à 5 mm.

Avantageusement, le gel est appliqué sur la couche de surface par pulvérisation, au pinceau ou avec une taloche.

Avantageusement (lors de l'étape b)), le séchage est réalisé à une température de 1°C à 50°C, de préférence de 1°C à 40°C, de préférence encore de 15°C à 25°C, et sous une humidité relative de 20% à 80%, de préférence de 20% à 70%.

Avantageusement, le gel est maintenu sur la couche de surface pendant une durée de 2 heures à 72 heures, de préférence de 4 à 48 heures, de préférence encore de 6 à 24 heures.

Avantageusement, le résidu sec et solide se présente sous la forme de particules, par exemple de paillettes, d'une taille de 1 à 10 mm, de préférence de 2 à 5 mm.

Avantageusement, le résidu sec et solide est éliminé de la surface du substrat solide par brossage et/ou aspiration.

Avantageusement, le cycle décrit plus haut peut être répété par exemple de 1 à 10 fois en utilisant le même gel lors de tous les cycles ou en utilisant des gels différents lors d'un ou de plusieurs cycle(s).

Avantageusement, lors de l'étape b), le gel, avant séchage total, est remouillé avec un solvant, de préférence avec le solvant du gel appliqué lors de l'étape a) ce qui évite alors généralement de répéter l'application du gel sur la surface et occasionne une économie de réactif et une quantité de déchet limitée. Cette opération de remouillage peut être répétée par exemple de 1 à 10 fois.

Le procédé selon l'invention possède toutes les propriétés avantageuses inhérentes au gel de décontamination qu'il met en œuvre et qui ont déjà été largement exposées plus haut.

Le procédé selon l'invention permet d'éliminer les espèces contaminantes, par exemple les espèces contaminantes radioactives, contenues dans une couche de surface en un matériau organique tout en étant beaucoup moins pénible et beaucoup moins coûteux que les procédés classiques utilisés précédemment à cette fin, à savoir notamment:

- les procédés mettant en œuvre des moyens haute pression, qui sont coûteux et « techniques » (complexes),
- les procédés mettant en œuvre des lingettes imbibées de solvants nocifs dont l'utilisation est longue et laborieuse.

Ainsi, le gel selon l'invention peut être pulvérisé à l'aide un simple pistolet à peinture trouvé dans le commerce tandis que les appareils de sablage, par exemple, nécessitent des réglages et une formation particulière. Ces appareils de sablage sont complexes et leur maintenance est coûteuse.

De plus, le procédé selon l'invention est un procédé par voie sèche qui évite les épanchements de dissolvant ou de décapant tout en optimisant le temps de travail de l'opérateur de nettoyage. En effet, celui-ci est capable de traiter plusieurs zones à la fois rapidement, du fait du temps de séchage du gel et de sa mise en œuvre avantageusement par pulvérisation.

En résumé, le procédé et le gel selon l'invention présentent entre autres, outre les propriétés avantageuses spécifiquement dues au solvant spécifique contenu dans le gel, les autres propriétés avantageuses suivantes :

- l'application du gel de préférence par pulvérisation. La pulvérisation permet de traiter rapidement et facilement de grandes surfaces et nécessite moins d'opérateurs,
- l'adhérence aux parois,
- l'obtention de l'efficacité maximale d'élimination de la contamination à l'issue de la phase de séchage du gel, y compris dans le cas de taches contaminées pénétrant dans le substrat, notamment dans le cas de surfaces poreuses.

En général, on fait en sorte que le temps de séchage soit supérieur ou égal à la durée nécessaire pour éliminer la couche de surface ou les tâches. Dans le cas d'une contamination profonde, on fait parfois appel à un remouillage.

- le traitement d'une gamme très large de matériaux (voir exemples),
- l'absence d'altération mécanique ou physique des matériaux du substrat solide à l'issue du traitement,
- la mise en œuvre du procédé dans des conditions climatiques variables (voir exemples),
- la réduction du volume de déchet,
- la facilité de récupération du déchet sec.

Les exemples fournis plus loin montrent notamment que le gel selon l'invention du fait de sa formulation spécifique et de sa mise en œuvre simple, fiable et facile, est efficace notamment pour l'élimination d'une grande variété de tâches contaminées sur une grande variété de matériaux.

D'autres caractéristiques et avantages de l'invention apparaîtront mieux à la lecture de la description détaillée qui suit, cette description étant faite à titre illustratif et non limitatif, en liaison avec les dessins joints.

## BRÈVE DESCRIPTION DES DESSINS

- La Figure 1 (A, B, C, D, E) présente des photographies qui montrent l'élimination d'une tâche de bitume sur une surface dense, lisse, telle qu'elle a été réalisée dans l'exemple 2, en utilisant le gel selon l'invention, dit gel *« Limo-1 »* préparé dans l'exemple 1.
- La Figure 2 (A, B, C, D, E, F, G) présente des photographies qui montrent l'élimination d'une tâche de bitume sur une surface poreuse, telle qu'elle a été réalisée dans l'exemple 2, en utilisant le gel selon l'invention, dit gel *« Limo-1 »*, préparé dans l'exemple 1.
- La Figure 3 (A, B, C) présente des photographies qui montrent l'élimination d'une tâche de bitume contaminé par du $^{137}$Cs collée à une surface dense, lisse, telle qu'elle a été réalisée dans l'exemple 4, en utilisant le gel selon l'invention, dit gel *« Limo-1 »* préparé dans l'exemple 1.
- La Figure 4A, illustre l'exemple 6, et présente une photographie de la surface d'une résine époxy avant le dépôt d'une couche de gel selon l'invention, dit gel *« Limo-1 »* préparé dans l'exemple 1, sur la surface d'une résine époxy (à gauche) et après le dépôt d'une couche de gel, le séchage de cette couche et l'élimination des paillettes de gel sec (à droite).

- La Figure 4B, illustre l'exemple 6, et montre les profils de surface correspondant aux surfaces photographiées sur la figure 4A, avant le dépôt d'une couche sur la surface de la résine époxy (à gauche) et après le dépôt d'une couche de gel, le séchage de cette couche et l'élimination des paillettes de gel sec (à droite).
- La Figure 5 est un graphique qui montre l'évolution de la viscosité (en Pa.s) en fonction du taux de cisaillement (1/s), pour le gel selon l'invention, dit gel *« Limo-1 »* préparé dans l'exemple 1 (voir exemple 7).
- La Figure 6 est un graphique qui montre l'évolution de la contrainte de cisaillement (en Pa) en fonction de la déformation (en Pa) pour le gel selon l'invention, dit gel *« Limo-1 »* préparé dans l'exemple 1 (voir exemple 7).
- La Figure 7 est un graphique qui montre l'évolution de la perte de masse (en %) en fonction du temps (en min.) du gel selon l'invention, dit gel *« Limo-1 »* préparé dans l'exemple 1, déposé avec une épaisseur de 2 mm (voir exemple 8).
- La Figure 8 est une photographie des paillettes obtenues après séchage du gel selon l'invention, dit gel « *Limo-1* » préparé dans l'exemple 1 (voir exemple 8).
- La Figure 9 (A, B, C) présente des photographies qui montrent l'élimination d'une tâche de bitume sur une surface dense, lisse, telle qu'elle a été réalisée dans l'exemple 9, en utilisant le gel selon l'invention, dit gel « *Limo-2* » préparé dans l'exemple 9.

## EXPOSÉ DÉTAILLÉ DE MODES DE RÉALISATION PARTICULIERS

Le gel selon l'invention peut être facilement préparé à la température ambiante.

Par exemple, le gel selon l'invention peut être préparé en ajoutant de préférence progressivement, le ou les agent(s) viscosant(s) inorganique(s), par exemple la ou les alumine(s) et/ou la ou les silice(s), au ou aux solvant(s) terpène éventuellement mélangé(s), avec de l'éthanol, ou au mélange du ou des solvant(s) organique(s) (avec éventuellement de l'éthanol) et du ou des adjuvant(s) éventuel(s).

Les adjuvants éventuels sont généralement le(s) tensio-actif(s), le(s) colorant(s) et/ou pigment(s), et le(s) agent(s) extractants de l'espèce contaminante, par exemple l'agent extractant des radionucléides.

Ce mélange du ou des solvant(s) et du ou des adjuvant(s) éventuel(s) peut être réalisé par agitation mécanique, par exemple au moyen d'un agitateur mécanique équipé d'une hélice à trois pales. La vitesse de rotation est par exemple de 200 tours/minute, et la durée de l'agitation est par exemple de 3 à 5 minutes.

L'addition du ou des agent(s) viscosant(s) inorganique(s) au solvant ou aux solvant(s), ou au mélange du ou des solvant(s) et du ou des adjuvant(s) éventuel(s) peut être réalisée en versant simplement le ou les agent(s) viscosant(s) dans ledit ou lesdits solvants ou ledit mélange.

Lors de l'addition du ou des agent(s) viscosant(s) inorganique(s), au ou aux solvant(s), ou au mélange du ou des solvant(s) et du ou des adjuvant(s) éventuel(s), ce ou ces solvant(s) ou ce mélange sont généralement maintenus sous agitation mécanique.

Cette agitation peut être, par exemple, réalisée au moyen d'un agitateur mécanique équipé d'une hélice à trois pales.

La vitesse d'agitation est généralement augmentée graduellement au fur et à mesure que la viscosité de la solution augmente, pour atteindre finalement une vitesse d'agitation comprise par exemple entre 400 et 600 tours/minute, sans qu'il n'y ait eu de projections.

Après la fin de l'ajout du ou des viscosant(s) minéral (aux), l'agitation est encore poursuivie, par exemple pendant 2 à 5 minutes, de manière à obtenir un gel parfaitement homogène.

Il est bien évident que d'autres protocoles de préparation des gels utilisés selon l'invention peuvent être mis en œuvre avec une addition des composants du gel dans un ordre différent de celui mentionné plus haut.

Généralement, le gel utilisé selon l'invention doit présenter une viscosité inférieure à 200 mPa.s sous un cisaillement de 1000 $s^{-1}$ de manière à permettre la pulvérisation sur la surface à décontaminer, à distance (par exemple à une distance de 1 à 5 m) ou à proximité (par exemple à une distance inférieure à 1 m, de préférence de 50 à 80 cm). Le temps de reprise de la viscosité doit généralement être inférieur à une seconde et la viscosité sous faible cisaillement supérieure à 10 Pa.s pour ne pas couler sur une paroi.

Il est à noter que l'agent tensio-actif éventuel du gel selon l'invention influence favorablement et notablement les propriétés rhéologiques du gel utilisé selon l'invention. Ce tensio-actif permet notamment que le gel utilisé selon l'invention puisse être mis en œuvre par pulvérisation et évite les risques d'épandage ou de coulure lors du traitement des surfaces verticales et des plafonds. Ce tensio-actif permet également de limiter le phénomène de ressuage observé lors de la conservation du gel.

Le gel ainsi préparé est ensuite appliqué sur la couche de surface contenant une espèce contaminante, par exemple une espèce contaminante radioactive, à traiter.

Selon la seconde variante du procédé selon l'invention, cette couche de surface contenant une espèce contaminante, par exemple une espèce contaminante radioactive est une couche se trouvant sur une surface d'un substrat solide, cette couche se présentant sous la forme d'une tâche ou de tâches discrètes du matériau organique contenant une espèce contaminante, par exemple une espèce contaminante radioactive.

Dans cette seconde variante, il n'existe quasiment aucune limitation quant au matériau qui constitue le substrat, en effet le gel selon l'invention permet de traiter sans aucun endommagement, toutes sortes de matériaux même fragiles.

Le gel selon l'invention ne génère aucune altération, érosion, attaque, chimique, mécanique ou physique du matériau du substrat traité. Le gel selon l'invention n'est donc en aucune manière préjudiciable à l'intégrité des matériaux traités et permet même leur réutilisation. Ce matériau du substrat peut donc être choisi parmi les matériaux déjà énumérés plus haut, par exemple parmi les métaux ou alliages comme l'acier inoxydable, les polymères tels que les matières plastiques ou caoutchoucs parmi lesquels on peut citer les PVC, PP, PE notamment HDPE, PMMA, PVDF, PC, les verres, les ciments, mortiers et bétons, les plâtres, les briques, la pierre naturelle ou artificielle, les enduits, les céramiques.

Dans tous les cas, quel que soit le matériau qui constitue le substrat, par exemple acier inoxydable, acier peint, laqué, verre, céramique, béton, PVC, dans cette seconde variante, la tâche ou les tâches discrètes du matériau organique contenant une espèce contaminante, par exemple une espèce contaminante radioactive est (sont) totalement dissoutes par le gel.

Il n'existe également aucune limitation quant à la forme, la géométrie et la taille de la couche à traiter et des substrats solides de la première et de la seconde variantes, le gel selon l'invention permet en effet le traitement de surfaces de grande taille, de géométries complexes, présentant par exemple des creux, angles, recoins.

Le gel selon l'invention assure le traitement efficace non seulement de surfaces horizontales, mais aussi de surfaces verticales telles que des murs, façades, piles de ponts, portes, ou de surfaces inclinées ou en surplomb telles que des plafonds.

Le gel selon l'invention garantit également une élimination complète et efficace de la contamination quels que soient le matériau organique de la couche contaminée et la nature de la contamination.

Par rapport aux techniques existantes qui mettent en œuvre des liquides tels que des solutions, l'invention met en œuvre un gel, ce qui est particulièrement avantageux pour le traitement de matériaux de grande surface, non transportables et implantés à l'extérieur. En effet, le procédé selon l'invention du fait de la mise en œuvre d'un gel, permet le nettoyage *in situ* en évitant l'épandage de solutions chimiques dans l'environnement et la dispersion des espèces contaminantes.

Le gel selon l'invention peut être appliqué sur la surface à traiter par tous les procédés d'application connus de l'homme du métier.

Des procédés classiques sont la pulvérisation par exemple au pistolet, ou l'application au moyen d'un pinceau, ou d'une taloche.

Pour l'application par pulvérisation du gel sur la surface à traiter, la solution colloïdale peut par exemple être véhiculée par l'intermédiaire d'une pompe basse pression, par exemple une pompe qui met en œuvre une pression inférieure ou égale à 7 bars, soit environ $7.10^5$ Pascals.

L'éclatement du jet de gel sur la surface peut être obtenu par exemple au moyen d'une buse à jet plat ou à jet rond.

La distance entre la pompe et la buse peut être quelconque, par exemple elle peut être de 1 à 50 m, notamment de 1 à 25 m.

Le temps de reprise de la viscosité suffisamment court des gels utilisés selon l'invention permet aux gels pulvérisés d'adhérer à toutes les surfaces, par exemple à des parois.

La quantité de gel déposé sur la surface à traiter est telle qu'indiquée plus haut.

La quantité de gel déposé par unité de surface et, par voie de conséquence, l'épaisseur du gel déposé influence la vitesse de séchage.

Ainsi, lorsque l'on pulvérise un film, couche de gel d'une épaisseur de 0,5 mm à 1 cm sur la couche à traiter, le temps de séchage, qui est alors généralement le temps de contact efficace, est suffisant à un bon traitement de la couche, conduisant à une dissolution de la couche et à une absorption des espèces contaminantes.

Le temps de contact efficace est la période pendant laquelle le principe actif contenu dans le gel qui n'est autre que le ou les solvant(s) va interagir avec la couche.

Le temps de séchage n'est pas uniquement lié à l'épaisseur de la couche de gel appliquée, mais aussi aux conditions climatiques, à savoir l'humidité relative et la température.

L'homme du métier pourra facilement déterminer, en fonction des conditions climatiques, et dans la plage d'épaisseur mentionnée plus haut, l'épaisseur de la couche de gel à appliquer sur la couche de surface afin que le gel soit efficace, que la couche soit dissoute et que les espèces contaminantes soient absorbées par le gel.

Ainsi si l'on se trouve à 20% d'humidité relative HR, et à 40°C, il est possible que le séchage d'une couche de gel d'une épaisseur de 0,5 mm appliquée sur une couche soit trop rapide pour permettre la dissolution de cette couche et l'absorption des espèces contaminantes dans le gel. Au contraire, si l'on se trouve à 15°C, et à 50% HR, le séchage d'une couche de la même épaisseur du même gel permet une dissolution de cette couche et l'absorption des espèces contaminantes dans le gel.

En outre, il a été montré de manière surprenante que la quantité de gel déposé lorsqu'elle se situe dans les plages mentionnées plus haut et, en particulier, lorsqu'elle est supérieure à 500 g/m$^2$ et notamment dans la plage de 500 à 5000 g/m$^2$, ce qui correspond à une épaisseur minimale de gel déposé, par exemple supérieure à 500 $\mu$m pour une quantité de gel déposé supérieure à 500 g/m$^2$, permettait après séchage du gel d'obtenir une fracturation du gel sous la forme de paillettes millimétriques, par exemple d'une taille de 1 à 10 mm, de préférence de 2 à 5 mm aspirables.

La quantité de gel déposé et donc l'épaisseur de gel déposé, de préférence supérieure à 500 g/m$^2$ soit 500 $\mu$m, est le paramètre fondamental qui influence la taille des résidus secs formés après séchage du gel et qui assure ainsi que des résidus secs de taille millimétrique et non des résidus pulvérulents soient formés, de tels résidus étant facilement éliminés par un procédé mécanique et de préférence par aspiration.

Cependant, il est également à noter que lorsque le gel contient un agent tensio-actif à faible concentration, le séchage du gel est amélioré et conduit à un phénomène de fracturation homogène avec une taille des résidus secs mono-dispersés et une aptitude accrue des résidus secs à se détacher du support.

Le gel est ensuite maintenu sur la surface à traiter pendant toute la durée nécessaire à son séchage.

Au cours de cette étape de séchage dont on peut considérer qu'elle constitue la phase active du procédé selon l'invention, le ou les solvant(s) contenu(s) dans le gel, s'évapore(nt) jusqu'à l'obtention d'un résidu sec et solide.

La durée de séchage dépend de la composition du gel dans les gammes de concentration de ses constituants données plus haut, mais aussi, comme on l'a déjà précisé, de la quantité de gel déposé par unité de surface c'est-à-dire de l'épaisseur de gel déposé.

La durée de séchage dépend aussi des conditions climatiques à savoir de la température, de la ventilation et de l'humidité relative de l'atmosphère dans laquelle se trouve la surface solide.

Le procédé selon l'invention peut être mis en œuvre dans des conditions climatiques extrêmement larges, à savoir à une température T de 1°C à 50°C et à une humidité relative HR de 20% à 80%.

La durée de séchage du gel selon l'invention est donc généralement de 15 minutes à 24 heures, de préférence de 1 heure à 24 heures à une température T de 1°C à 50°C et à une humidité relative HR de 20% à 80%.

Il est à noter que la formulation du gel utilisé selon l'invention notamment lorsqu'elle contient des tensio-actifs tels que les « Pluronics® » assure généralement (c'est-à-dire notamment généralement dans des conditions climatiques raisonnables, comme on l'a indiqué plus haut) un temps de séchage qui est sensiblement équivalent au temps de contact entre le gel et la couche de surface qui est nécessaire, requis pour dissoudre le matériau organique.

En d'autres termes, la formulation du gel assure un temps de séchage qui n'est autre que le temps nécessaire pour dissoudre le matériau organique et absorber les espèces contaminantes. A l'issue du séchage du gel, le gel se fracture de manière homogène pour donner des résidus secs solides millimétriques, par exemple d'une taille de 1 à 10 mm, de préférence de 2 à 5 mm non pulvérulents, généralement sous la forme de paillettes solides. Les résidus secs et solides contiennent les espèces contaminantes, par exemple les espèces contaminantes radioactives, et le matériau organique qui a été dissout de la couche de surface.

Les résidus secs, tels que des paillettes, obtenus à l'issue du séchage présentent une faible adhérence à la surface du matériau nettoyé. De ce fait, les résidus secs obtenus après séchage du gel peuvent être facilement récupérés par simple brossage et/ou aspiration. Toutefois, les résidus secs peuvent aussi être évacués par jet de gaz, par exemple par jet d'air comprimé.

Aucun rinçage n'est généralement nécessaire et le procédé selon l'invention ne génère aucun effluent secondaire.

Toutefois, un léger rinçage par exemple à l'eau, des surfaces traitées, sans action mécanique telle qu'un brossage peut exceptionnellement être nécessaire pour éliminer éventuellement des traces de peinture résiduelles et de faibles résidus de gel.

Selon l'invention, on réalise donc ainsi tout d'abord une importante économie de réactifs chimiques par rapport à un procédé de décontamination par lavage avec une solution. Ensuite du fait qu'un déchet sous la forme d'un résidu sec directement aspirable est obtenu, une opération de rinçage avec de l'eau ou avec un liquide est généralement évitée. Il en résulte bien évidemment une diminution de la quantité d'effluents produits mais aussi une simplification notable en termes de filière de traitement et d'exutoire. En particulier, selon l'invention les déchets obtenus à la fin du traitement ne sont pas entraînés dans les réseaux d'évacuation des eaux pluviales en violation des réglementations.

En raison de la composition du gel utilisé selon l'invention, les déchets produits, une fois secs, ne représentent qu'un faible volume et sont essentiellement minéraux. Ils peuvent donc être stockés ou dirigés vers une filière d'évacuation sans traitement préalable.

A titre d'exemple, dans le cas courant où l'on applique 1000 grammes de gel par m$^2$ de surface traitée, la masse de déchets secs produite est inférieure à 300 grammes par m$^2$.

L'invention va maintenant être décrite en référence aux exemples suivants, donnés à titre illustratif et non limitatif.

**Exemples.**

Exemple 1.

Dans cet exemple, on décrit la formulation d'un gel selon l'invention, dit gel « *Limo*-1 », utilisé dans les exemples 2 à 7.

Le gel selon l'invention, dit gel «Limo-1 » est un gel dont la composition est la suivante :

- 10% en masse d'alumine pyrogénée

- 90% en masse d'un agent actif qui est du d-limonène.

L'alumine est l'alumine Aeroxide® Alu C commercialisée par EVONIK INDUSTRIES® qui est une alumine pyrogénée d'une surface spécifique de 100 m$^2$/g (BET), et le d-limonène est le d-limonène commercialisée par la société MERCK®.

Ce gel est préparé selon le protocole suivant :

Le d-limonène est tout d'abord pesé dans un récipient adapté.

Le d-limonène est agité à l'aide d'un agitateur mécanique, muni d'un agitateur à trois pales, à une vitesse de 200 rotations/min., pendant 3 à 5 minutes.

L'alumine, dans une proportion de 10% en masse, est ensuite ajoutée progressivement dans le d-limonène, agité à l'aide de l'agitateur mécanique. Au fur et à mesure de l'addition d'alumine, la viscosité du milieu agité augmente.

On augmente donc aussi graduellement la vitesse de rotation au fur et à mesure que la viscosité du milieu agité croît, pour arriver à environ 400 à 600 tours/min lorsque la totalité de l'alumine a été ajoutée, en faisant en sorte qu'il n'y ait pas de projections.

Le gel ainsi préparé est finalement maintenu sous agitation pendant 5 minutes, et laissé au repos pendant une durée d'au moins une heure avant son utilisation.

Exemple 2.

Dans cet exemple, on montre la capacité du gel selon l'invention, dit gel *« Limo-1 »,* préparé dans l'exemple 1, à éliminer des tâches de bitume aussi bien sur une surface dense, lisse, que sur une surface poreuse. Les tâches de bitume sont réalisées en déposant sur la surface dense, lisse, et sur la surface poreuse, et sous une lourde charge, une petite bille de bitume préalablement légèrement chauffée. La charge est laissée 24h pour permettre une bonne adhésion des tâches de bitume à la surface dense, lisse, et à la surface poreuse.

Le gel selon l'invention, dit gel *« Limo-1 »,* est ensuite déposé, ici à la spatule, en quantité suffisante sur chacune des tâches de bitume puis on le laisse sécher pendant 48h. On récupère finalement par brossage le déchet solide obtenu à l'issue du séchage.

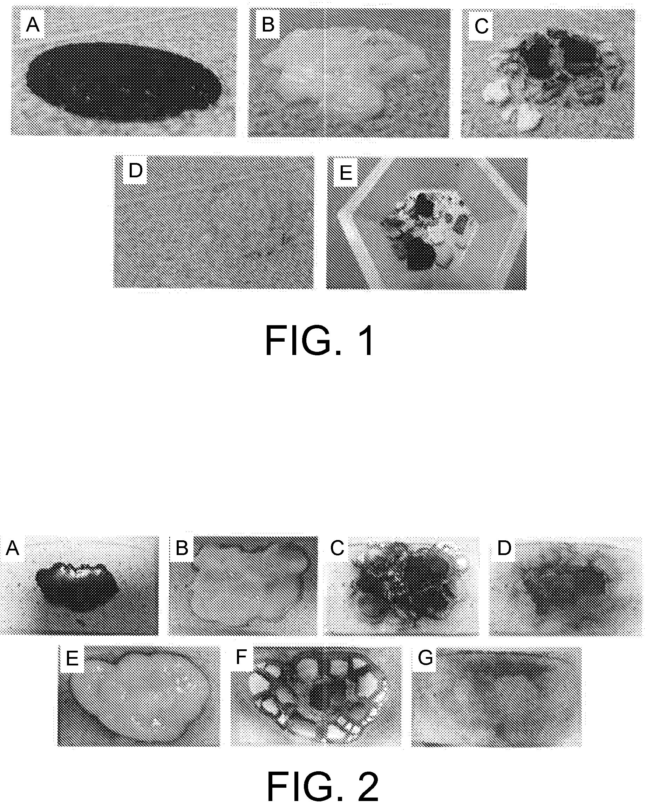

La Figure 1 présente les résultats obtenus sur une surface dense, lisse en résine époxy.

On observe que, en une passe du gel « *Limo-1»,* la totalité de la tâche de bitume a pu être éliminée. Une passe consiste au dépôt du gel sur la tache de bitume, au séchage du gel appliqué, puis au brossage du déchet solide obtenu à l'issue du séchage.

La Figure 2 présente les résultats obtenus sur une surface poreuse (un béton).

On observe que deux passes successives du gel *« Limo-1 »* ont été nécessaires afin d'éliminer la tâche de bitume.

Il est en effet nécessaire d'optimiser le rapport quantité de gel/taille de la tâche de bitume pour pouvoir diminuer au maximum le nombre de passes de gel à effectuer.

Ces résultats démontrent ainsi la capacité d'un gel selon l'invention à éliminer totalement ou presque totalement une matrice organique d'une surface dense ou poreuse.

Exemple 3.

Dans cet exemple, on décrit le protocole de contamination artificielle du bitume par du $^{137}$Cs, qui a été mis au point, et on décrit ensuite la préparation d'un support ou surface dense, lisse, en résine époxy contaminé par une tâche adhérente de ce bitume contaminé artificiellement par du $^{137}$Cs.

La contamination du bitume a été fixée à 40.000 Bq/g afin de simuler au mieux les tâches de bitume présentes au sol dans les installations nucléaires.

Ce protocole comprend les étapes successives suivantes :

- 2 mL d'une solution aqueuse de $^{137}$Cs à environ 40.000 Bq/mL sont déposés au fond d'une coupelle (de type boite de Pétri) avec un rebord assez haut.

On laisse ensuite s'évaporer cette solution. La contamination en $^{137}$Cs est donc déposée de manière labile au fond de la coupelle.

- On dépose ensuite dans la coupelle 2 grammes de bitume non contaminé, puis on place cette coupelle sur une plaque chauffante portée à 100°C pendant environ 1 minute. Le bitume devient beaucoup moins visqueux, presque liquide, et s'étale au fond de la coupelle.
- On peut alors remuer lentement le bitume dans la coupelle à l'aide d'une spatule, pour intégrer de manière homogène, dans le bitume, la contamination en $^{137}$Cs déposée au fond de la coupelle comme on l'a décrit plus haut. La coupelle est maintenue à l'aide d'une pince isolante permettant d'éviter tout contact entre l'utilisateur et le système constitué par la plaque chauffante et la coupelle chaude.
- De petites billes du bitume contaminé ainsi préparées, encore tièdes sont ensuite déposées sur les surfaces à contaminer.
- On place une feuille de papier sulfurisé (qui n'accroche pas au bitume), sur les billes de bitume ainsi déposées, puis on applique une légère charge sur ces billes de bitume afin de les aplanir au maximum.
- Enfin, on laisse refroidir et reposer pendant 24h.

Des mesures d'activité radiologique, à savoir un comptage y sont effectuées sur chaque système constitué par un support, surface, et une tâche de bitume contaminée, avant de réaliser l'opération de décontamination.

Exemple 4.

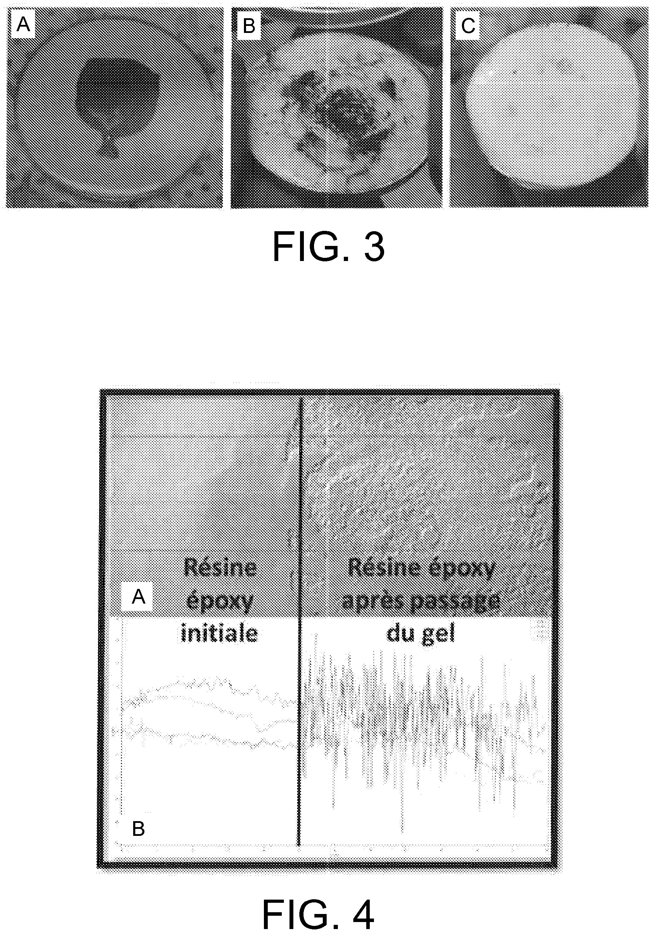

Dans cet exemple, on réalise l'élimination d'une tache de bitume contaminé par du $^{137}$Cs collée à une surface dense, et on montre ainsi le pouvoir de décontamination du gel selon l'invention, dit gel « *Limo-1»,* décrit dans l'exemple 1, sur un support, surface dense contaminé par une tâche adhérente de bitume contaminée artificiellement par du $^{137}$Cs.
On prépare du bitume contaminé artificiellement par du $^{137}$Cs, selon le protocole décrit dans l'exemple 3, puis on prépare, conformément à l'exemple 3, un support ou surface dense en résine époxy contaminé par une tâche adhérente de bitume contaminée artificiellement par du $^{137}$Cs (FIG. 3A). Après un premier comptage de l'activité radiologique, on dépose avec une spatule du gel *« Limo-1»* sur la tâche de bitume contaminée puis on laisse sécher pendant 48h.
On obtient alors des paillettes que l'on peut facilement brosser (FIG. 3B).
Un second comptage de l'activité radiologique est ensuite réalisé et un premier Facteur de Décontamination (FD) peut être calculé.

Rappelons que FD = Valeur de la contamination initiale / valeur de la contamination finale.

On obtient alors un FD de 23 pour une contamination initiale de 4600 Bq.
L'application d'une deuxième couche de gel permet d'augmenter ce FD jusqu'à 156. Il ne reste donc plus qu'une contamination très faible sur le support dense, lisse (FIG. 3C).
Les valeurs des activités radiologiques mesurées au cours de l'opération de décontamination radiologique effectuée dans l'exemple 4 sont regroupées dans le Tableau I ci-dessous.

Tableau I : Valeurs des activités radiologiques mesurées au cours de l'opération de décontamination d'une surface dense, lisse.

| Gel | Limo-1 |
|---|---|
| Contamination initiale (support + bitume) ($\pm$ 15%) | 4600 Bq |
| Contamination après 1 passe de gel ($\pm$ 5%) | 199 Bq |
| **FD_1** | **23** |
| Contamination après 2 passes de gel ($\pm$ 5%) | 29 Bq |
| **FD_2** | **156** |

Ces résultats montrent bien l'efficacité du gel selon l'invention dit gel « *Limo-1* » pour la décontamination d'un support avec une surface dense, lisse, tel que qu'un support en résine époxy contaminé par une tâche de bitume contaminé.

Exemple 5.

Dans cet exemple, on réalise l'élimination d'une tâche de bitume contaminée par du $^{137}$Cs collée à une surface poreuse, et on montre ainsi le pouvoir de décontamination du gel selon l'invention, dit gel *« Limo-1»,* décrit dans l'exemple 1, sur un support, surface poreuse contaminé par une tâche adhérente de bitume contaminée artificiellement par du $^{137}$Cs,

On prépare du bitume contaminé artificiellement par du $^{137}$Cs, selon le protocole décrit dans l'exemple 3, puis on prépare conformément à l'exemple 3, un support ou surface poreuse en béton contaminé par une tâche adhérente de ce bitume contaminée artificiellement par du $^{137}$Cs.

Après un premier comptage de l'activité radiologique, on dépose avec une spatule du gel *« Limo-1»* sur la tâche de bitume contaminée puis on laisse sécher pendant 48h.

On obtient alors des paillettes que l'on peut facilement brosser.

Un second comptage de l'activité radiologique est ensuite réalisé et un premier Facteur de Décontamination (FD) peut être calculé.

Rappelons que FD = Valeur de la contamination initiale / valeur de la contamination finale.

On obtient alors un FD de 2 pour une contamination initiale de 5500 Bq.

L'application d'une deuxième couche de gel permet d'atteindre un FD de 27.

L'application d'une troisième couche de gel permet d'atteindre un FD de 85.

Il ne reste donc plus qu'une contamination très faible sur le support poreux.

Les valeurs des activités radiologiques mesurées au cours de l'opération de décontamination radiologique effectuée dans l'exemple 5 sont regroupées dans le Tableau II ci-dessous.

Tableau II: Valeurs des activités radiologiques mesurées au cours de l'opération de décontamination d'une surface poreuse.

| Gel | Limo-1 |
|---|---|
| Contamination initiale (gel + bitume) ($\pm$ 15%) | 5500 Bq |
| Contamination après 1 passe de gel ($\pm$ 15%) | 2300 Bq |
| **FD_1** | **2** |
| Contamination après 2 passes de gel ($\pm$ 5%) | 205 Bq |
| **FD_2** | **27** |
| Contamination après 3 passes de gel ($\pm$ 15%) | 65 Bq |
| **FD_3** | **85** |

Ces résultats montrent bien l'efficacité du gel selon l'invention dit gel « *Limo-1* » pour la décontamination d'un support avec une surface poreuse telle qu'un support en béton contaminé par une tâche de bitume contaminée.

Exemple 6.

Dans cet exemple, on montre la capacité du gel selon l'invention dit gel *« Limo-1»* à attaquer chimiquement une matrice organique telle qu'une matrice en résine époxy.

On utilise pour cela un profilomètre optique qui va permettre de caractériser l'état de surface d'une résine époxy avant et après application du gel.

La Figure 4A présente ainsi une photographie de la surface d'une résine époxy avant le dépôt d'une couche sur la surface de la résine époxy (à gauche) et après le dépôt d'une couche de gel, le séchage de cette couche et l'élimination des paillettes de gel sec (à droite).

La Figure 4B, montre les profils de surface correspondant aux surfaces photographiées sur la figure 4A, avant le dépôt d'une couche sur la surface de la résine époxy (à gauche) et après le dépôt d'une couche de gel, le séchage de cette couche et l'élimination des paillettes de gel sec (à droite).

On observe que la résine époxy est clairement dégradée sur la partie droite de la Figure 4A qui montre la surface obtenue suite au dépôt, au séchage et à l'élimination des paillettes du gel *« Limo-1»*.

Cette dégradation est obtenue sur une épaisseur de quelques micromètres (Figure 4B).

Ces résultats démontrent ainsi que le gel *« Limo-1 »* selon l'invention attaque la résine époxy sur quelques microns d'épaisseur.

Cette propriété va ainsi permettre au gel selon l'invention de libérer puis de capturer les contaminants incrustés sous la surface (en subsurface) de ce type de matrices organiques.

Exemple 7.

Dans cet exemple, on montre que le gel selon l'invention, dit gel *« Limo-1 »* préparé dans l'exemple 1 peut être mis en œuvre par pulvérisation.

Une étude rhéologique du gel *« Limo-1 »* selon l'invention, préparé dans l'exemple 1 a été réalisée et permet de montrer que ce procédé est adapté à une mise en œuvre par pulvérisation.

Pour que ce type de gel puisse être appliqué selon un procédé de pulvérisation, il faut qu'il possède les propriétés d'un fluide rhéofluidifiant, thixotrope, avec un temps de reprise très court (inférieur à la seconde), et qu'il possède une contrainte seuil (typiquement supérieure à 10-15 Pa).

Différentes mesures rhéologiques ont été réalisées à l'aide d'un rhéomètre TA Instruments® AR-IOOO en géométrie « Vane » et sont présentées dans cet exemple.

Dans un premier temps, la viscosité du gel a été mesurée en fonction du taux de cisaillement.

Après un pré-cisaillement de 5 minutes à un taux de cisaillement de $20\ s^{-1}$, puis de 1 minute à $0,015\ s^{-1}$, plusieurs paliers de taux de cisaillement allant de $0,015\ s^{-1}$ à $100\ s^{-1}$ sont effectués avec une mesure de la viscosité toutes les 30 secondes.

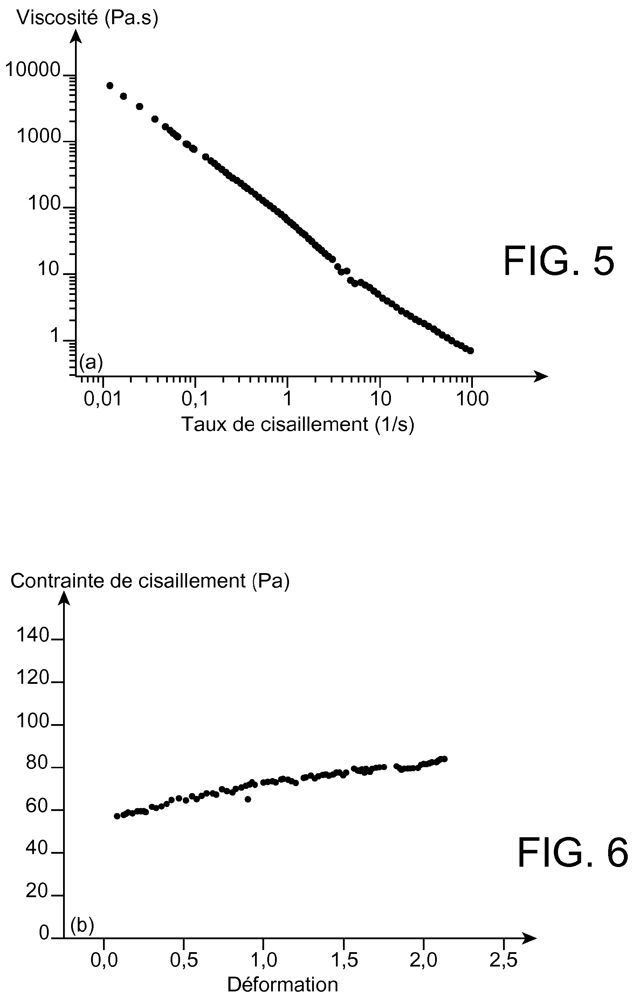

La Figure 5 donne l'évolution de la viscosité (Pa.s) du gel *« Limo-1 »* selon l'invention en fonction du taux de cisaillement $(s^{-1})$ pour des taux de cisaillement compris entre 0,015 et $100\ s^{-1}$. On observe une chute linéaire (en échelle logarithmique) de la viscosité avec le taux de cisaillement, caractéristique du comportement d'un fluide rhéofluidifiant avec contrainte seuil.

La Figure 6 représente la valeur de contrainte de cisaillement en fonction de la déformation obtenue à un taux de cisaillement imposé pour le gel selon l'invention, dit gel « Limo-1 » décrit dans l'exemple 1. Un faible taux de cisaillement $(0,015\ s^{-1})$ est appliqué de manière constante afin de déformer le gel en partant du repos et ainsi de déterminer le seuil d'écoulement. On observe un écoulement déjà quasi stationnaire avec des valeurs de contrainte de cisaillement supérieures à 60 Pa. La contrainte seuil du matériau à très forte déformation sera donc bien supérieure à 20 Pa, ce qui va permettre au gel de tenir sur une paroi pour des épaisseurs comprises entre 0 et au moins 2 mm.

En conclusion, cet exemple, montre que le gel *« Limo-1 »* selon l'invention possède bien les propriétés rhéologiques adéquates lui permettant d'être très facilement pulvérisable sur des surfaces horizontales ou non.

Exemple 8.

Dans cet exemple, on montre que le gel selon l'invention, dit gel *« Limo-1 »* préparé dans l'exemple 1 est aspirable après application et séchage.

Autrement dit, il s'agit dans cet exemple de montrer que le gel selon l'invention, dit gel *« Limo-1 »* préparé dans l'exemple 1 se fracture bien en produisant des paillettes non pulvérulentes de taille millimétrique pouvant être facilement aspirées.

Pour réaliser cette étude, le gel Limo-1 est mis à sécher dans une enceinte climatique Binder® dont la température et le pourcentage d'humidité relative sont fixés à 25°C et 50% respectivement.

Le gel est étalé sur une nacelle en acier inoxydable usinée de façon à obtenir une épaisseur contrôlée de 2 mm de gel dans la nacelle.

Dans l'enceinte climatique, une balance de précision Sartorius® est installée, de même qu'une caméra Moticam® entourée d'une lampe à LED circulaire (VWR) qui est placée sur le dessus de la balance.

La balance et la caméra Moticam® sont reliées à un ordinateur placé en dehors de l'enceinte climatique permettant ainsi l'acquisition simultanée, au cours du séchage en atmosphère contrôlée, de la masse et des images de la nacelle remplie de gel.

Il est à noter que la nacelle contenant le gel est placée dans la balance de précision et que toutes les portes de la balance sont fermées, exception faite de la porte opposée à la soufflerie d'alimentation en air de l'enceinte climatique, qui est ouverte de 3 cm, pour maintenir l'atmosphère contrôlée dans l'habitacle de la balance, tout en limitant le flux d'air lié au fonctionnement de l'enceinte climatique. L'enregistrement de la masse au cours du séchage permet alors de tracer une courbe qui donne la perte de masse en fonction du temps et qui représente donc la cinétique de séchage.

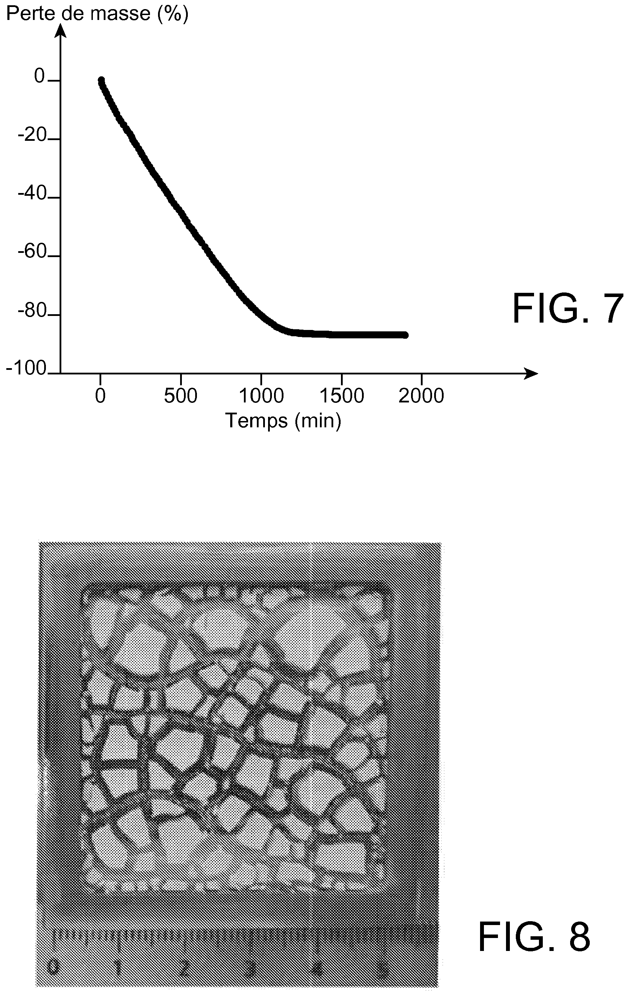

L'évolution de la perte de masse en fonction du temps est présentée sur la Figure 7, et une photographie représentant la taille finale des paillettes de gel est présentée sur la Figure 8.

On observe ainsi qu'une épaisseur de 2 mm du gel *« Limo-1 »* sèche en quelques heures, plus exactement en environ 1200 minutes, soit 20 heures. Il apparaît de plus que le nombre de paillettes formées et surtout leur taille est bien conforme au fait que ces paillettes sont de tailles millimétriques et ne sont pas pulvérulentes.

Exemple 9.

Dans cet exemple, on réalise l'élimination d'une tache de bitume à l'aide d'un gel dit *« Limo-2 »* dont la composition est la suivante :

- 14% en masse d'alumine pyrogénée

- 19% en masse d'éthanol

- 67% en masse de d-limonène

L'alumine est l'alumine Aeroxide® Alu C commercialisée par EVONIK INDUSTRIES® qui est une alumine pyrogénée d'une surface spécifique de 100 m$^2$/g (BET), et le d-limonène est le d-limonène commercialisée par la société MERCK®. L'éthanol est commercialisé par la société MERCK®.
Ce gel a été préparé selon le protocole décrit dans l'exemple 1.
Une tache de bitume est réalisée en déposant sur une surface dense, lisse, et sous une lourde charge, une petite bille de bitume préalablement légèrement chauffée. La charge est laissée 24h sur la tache pour permettre sa bonne adhésion sur la surface.
Le gel« *Limo-2* » est ensuite déposé, ici à la spatule, en quantité suffisante sur la tache de bitume puis on le laisse sécher pendant 48h. On récupère finalement par brossage le déchet solide obtenu à l'issue du séchage.

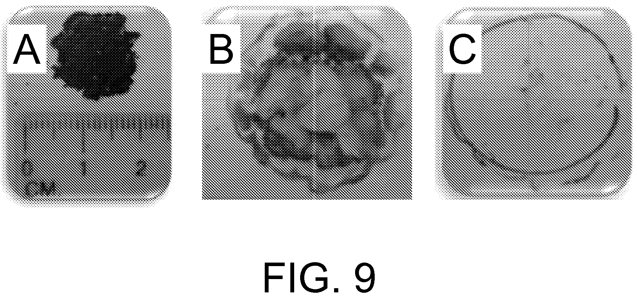

La Figure 9 présente le résultat obtenu sur une surface dense, lisse.
On observe que, en une passe du gel « *Limo-2»,* la totalité de la tache de bitume a pu être éliminée.
Une passe consiste au dépôt du gel sur la tache de bitume, au séchage du gel appliqué, puis au brossage du déchet solide obtenu à l'issue du séchage.

**REFERENCES**

[1] FR-A1-2 827 530.
[2] FR-A1-2 891470.
[3] WO-A1-99/09134.
[4] FR-A1-3 027 310.
[5] FR-A1-2 957 929.
[6] FR-A1-2962046 et WO-A1-2012/00104.
[7] FR-A1-3003763 et WO-A1-2014/154818.

**Revendications**

1. Gel aspirable pour éliminer une espèce contaminante contenue dans une couche constituée par un matériau organique, en surface d'un substrat solide, constitué par une solution colloïdale comprenant, de préférence constituée par :

- 1% à 25% en masse, de préférence 5% à 25% en masse, de préférence encore 5% à 20% en masse, mieux 7% à 15% en masse, par exemple 10% à 14% en masse, par rapport à la masse totale du gel, d'au moins un agent viscosant inorganique constitué par une ou plusieurs alumine(s) choisie(s) parmi les alumines pyrogénées
- 13% à 99% en masse, de préférence 80% à 95% en masse, par exemple 90% en masse, par rapport à la masse totale du gel, d'un ou plusieurs solvant(s) organique(s) choisi(s) parmi les terpènes;
- éventuellement, de 1% à 40% en masse, de préférence de 10% à 20% en masse, par rapport à la masse totale du gel, d'éthanol;
- éventuellement, de 0,01% à 10% en masse, par rapport à la masse totale du gel, d'au moins un colorant et/ou pigment;
- éventuellement, de 0,1% à 2% en masse, par rapport à la masse totale du gel, d'au moins un agent tensio-actif;
- éventuellement, de 0,1% à 10 % en masse, de préférence de 1% à 5 % en masse, par rapport à la masse totale du gel, d'au moins un agent extractant de l'espèce contaminante, par exemple d'au moins un agent extractant des radionucléides, de préférence choisi parmi les zéolithes et les argiles.

2. Gel selon la revendication 1, dans lequel les terpènes sont choisis parmi les hydrocarbures terpéniques, les composés terpéniques oxygénés, et les isomères, notamment les isomères optiques, de ceux-ci ; de préférence, les terpènes sont choisis parmi l'ocimène, le α-pinène, le β-pinène, le limonène, le menthol, la menthone, le terpinéol, l'isobornéol, le camphre, le nérol, le citronellal, le citronellol, la myrcène, le myrcénol, le linalol, le géraniol, et les isomères, notamment les isomères optiques de ceux-ci ; de préférence encore, le gel comprend, en tant que solvant organique choisi parmi les terpènes, de préférence en tant que seul solvant organique choisi parmi les terpènes, du d-limonène.

3. Gel selon la revendication 2, comprenant de 35% à 94% en masse, de préférence de 65% à 83% en masse, de préférence encore de 70% à 80% en masse, par exemple 67% en masse, par rapport à la masse totale du gel, de d-limonène, et de 1% à 40% en masse, de préférence de 10% à 20% en masse, par exemple 19% à 20% en masse, par rapport à la masse totale du gel, d'éthanol.

4. Gel selon l'une quelconque des revendications 1 à 3, dans lequel la ou les alumine(s) représente(nt) de 5% à 25% en masse, de préférence de 7% à 15% en masse par rapport à la masse totale du gel.

5. Gel selon l'une quelconque des revendications précédentes, dans lequel l'agent tensio-actif est choisi parmi les agents tensio-actifs non ioniques tels que les copolymères blocs, séquencés comme les copolymères séquencés d'oxyde d'éthylène et d'oxyde de propylène, et les acides gras éthoxylés ; et leurs mélanges.

6. Gel selon l'une quelconque des revendications précédentes, constitué par une solution colloïdale comprenant, de préférence constituée par :

   - 1% à 25% en masse, de préférence 5% à 25% en masse, de préférence encore 5% à 20% en masse, mieux 7% à 15% en masse, par exemple 10% à 14% en masse, par rapport à la masse totale du gel, d'au moins une alumine pyrogénée
   - 35% à 94% en masse, de préférence de 65% à 83% en masse, de préférence encore de 70% à 80% en masse, par exemple 67% en masse par rapport à la masse totale du gel, de d-limonène;
   - de 1% à 40% en masse, de préférence de 10 à 20% en masse, par exemple 19% à 20% en masse, par rapport à la masse totale du gel, d'éthanol.

7. Procédé pour éliminer une espèce contaminante contenue dans une couche constituée par un matériau organique en surface d'un substrat solide, dans lequel on réalise au moins un cycle comprenant les étapes successives suivantes :

   a) on applique le gel aspirable selon l'une quelconque des revendications 1 à 6 sur ladite couche constituée par un matériau organique ; de préférence, le gel est appliqué par pulvérisation, au pinceau, ou avec une taloche ;
   b) on maintient le gel sur la couche constituée par un matériau organique au moins pendant une durée suffisante pour que le gel dissolve en partie ou en totalité le matériau organique de la couche constituée par un matériau organique, absorbe l'espèce contaminante (pour que l'espèce contaminante migre dans le gel), et pour que le gel sèche et forme un résidu sec et solide non pulvérulent contenant le matériau organique de la couche constituée par un matériau organique qui a été dissout, et l'espèce contaminante;
   c) on élimine le résidu sec et solide contenant le matériau organique de la couche organique qui a été dissout, et l'espèce contaminante ; de préférence, le résidu sec et solide est éliminé de la surface du substrat solide par brossage et/ou aspiration.

8. Procédé selon la revendication 7, dans lequel l'espèce contaminante est une espèce contaminante radioactive, et/ou chimiquement toxique, et/ou toxique du fait de sa forme et/ou de sa taille ; de préférence, l'espèce contaminante toxique du fait de sa forme et/ou de sa taille, est une espèce contaminante se présentant sous la forme de particules solides telles que des microparticules, ou des nanoparticules, par exemple sous la forme de fibres telles que des microfibres ou des nanofibres, sous la forme de nanotubes, ou sous la forme de cristaux tels que des nanocristaux.

9. Procédé selon l'une quelconque des revendications 7 à 8, dans lequel l'espèce contaminante est choisie parmi les métaux et métalloïdes sous forme de métal, de métalloïde, ou ionique, de préférence parmi les métaux dits « métaux lourds », et les métaux et métalloïdes toxiques sous forme de métal, de métalloïde, ou ionique; les composés de ces métaux et métalloïdes tels que les composés organométalliques, les sels de métaux, les oxydes de métaux, les carbures de métaux, etc. ; les céramiques ; et les verres par exemple sous la forme de laine de verre ; de préférence, les métaux dits « métaux lourds », et les métaux et métalloïdes toxiques sont l'antimoine, l'arsenic, le cadmium, le chrome , le cuivre, le plomb, le mercure, le nickel, le sélénium, le tellure, le thallium et l'étain.

10. Procédé selon la revendication 9, dans lequel l'espèce contaminante est l'amiante.

11. Procédé selon l'une quelconque des revendications 7 à 10, dans lequel la couche constituée par un matériau organique contenant une espèce contaminante est une couche de surface d'un substrat solide constitué par ledit (le même) matériau organique, de préférence ce matériau organique est choisi parmi les peintures, les laques, les polymères organiques, et les résines organiques comme les résines époxy; de préférence le substrat solide constitué par un matériau organique est un substrat solide massif ou une couche, telle qu'une couche de peinture ou de résine époxy, par exemple une couche de peinture ou de résine époxy formant un revêtement sur une surface d'un substrat.

12. Procédé selon l'une quelconque des revendications 7 à 11, dans lequel la couche constituée par un matériau organique contenant une espèce contaminante est une couche se trouvant sur une surface d'un substrat solide, cette couche se présentant sous la forme d'une couche continue, ou d'une tâche ou de tâches discrètes du matériau organique contenant une espèce contaminante ; de préférence, le matériau organique est choisi parmi les matériaux organiques collants.

13. Procédé selon la revendication 12, dans lequel le matériau organique est choisi parmi les huiles, telles que les huiles hydrocarbonées, les bitumes, les goudrons et les graisses.

14. Procédé selon l'une quelconque des revendications 7 à 13, dans lequel le gel est appliqué sur la couche de surface à raison de 100 g à 10000 g, de préférence de 500 g à 5000 g de gel par m$^2$ de surface, de préférence encore de 500 à 1500 g de gel par m$^2$ de surface, mieux de 600 à 1000 g, ce qui correspond généralement à une épaisseur de gel déposé sur la surface de 0,1mm à 1 cm, de préférence de 0,5 mm à 5mm.

15. Procédé selon l'une quelconque des revendications 7 à 14, dans lequel le gel est maintenu sur la surface pendant une durée de 2 heures à 72 heures, de préférence de 4 à 48 heures, de préférence encore de 6 heures à 24 heures.

16. Procédé selon l'une quelconque des revendications 7 à 15, dans lequel le résidu sec et solide se présente sous la forme de particules, par exemple de paillettes, d'une taille de 1 à 10 mm, de préférence de 2 à 5 mm.

17. Procédé selon l'une quelconque des revendications 7 à 16, dans lequel le cycle est répété de 1 à 10 fois en utilisant le même gel lors de tous les cycles ou en utilisant des gels différents lors d'un ou de plusieurs cycle(s).

18. Procédé selon l'une quelconque des revendications 7 à 17, dans lequel lors de l'étape b), le gel, avant séchage total, est remouillé avec un solvant, de préférence avec le solvant du gel appliqué lors de l'étape a).

**Patentansprüche**

1. Saugfähiges Gel zur Entfernung einer kontaminierenden Spezies, die in einer Schicht, bestehend aus organischem Material, auf der Oberfläche eines festen Substrats enthalten ist, das aus einer kolloidalen Lösung besteht, bestehend aus Folgendem, umfassend:

   - 1 bis 25 Massenprozent, vorzugsweise 5 bis 25 Massenprozent, noch bevorzugter 5 bis 20 Massenprozent, besser 7 bis 15 Massenprozent, beispielsweise 10 bis 14 Massenprozent, bezogen auf die Gesamtmasse des Gels, von mindestens einem anorganischen viskosen Mittel, das aus einem oder mehreren aus pyrogenen Aluminiumoxiden ausgewählten Aluminiumoxiden besteht
   - 13 bis 99 Massenprozent, vorzugsweise 80 bis 95 Massenprozent, beispielsweise 90 Massenprozent, bezogen auf die Gesamtmasse des Gels eines oder mehrerer organischer Lösungsmittel, die unter Terpenen ausgewählt sind;
   - gegebenenfalls von 1 bis 40 Massenprozent, vorzugsweise von 10 bis 20 Massenprozent, bezogen auf die Gesamtmasse des Gels, von Ethanol;
   - gegebenenfalls von 0,01 bis 10 Massenprozent bezogen auf die Gesamtmasse des Gels, mindestens eines Farbstoffs und/oder eines Pigments;
   - gegebenenfalls von 0,1 bis 2 Massenprozent, bezogen auf die Gesamtmasse des Gels, mindestens eines Tensids;
   - gegebenenfalls von 0,1 bis 10 Massenprozent, vorzugsweise von 1 bis 5 Massenprozent, bezogen auf die Gesamtmasse des Gels, mindestens eines Extraktionsmittels der kontaminierenden Spezies, beispielsweise mindestens eines Extraktionsmittels der Radionuklide, vorzugsweise ausgewählt aus Zeoliten und Ton.

2. Gel nach Anspruch 1, wobei die Terpene unter terpenischen Kohlenwasserstoffen, sauerstoffhaltigen terpenischen Verbindungen und Isomeren, insbesondere optischen Isomeren, davon ausgewählt sind; vorzugsweise sind die Terpene aus Ocimen, α-Pinen, β-Pinen, Limonen, Menthol, Menthon, Terpineol, Isoborneol, Kampfer, Nerol, Citronellal, Citronellol, Myrcen, Myrcenol, Linalool, Geraniol und Isomeren, insbesondere optischen Isomeren davon ausgewählt; noch bevorzugter umfasst das Gel, als unter Terpenen ausgewähltes organisches Lösungsmittel, vorzugsweise als einziges unter Terpenen ausgewähltes organisches Lösungsmittel, d-Limonen.

3. Gel nach Anspruch 2, umfassend 35 bis 94 Massenprozent, vorzugsweise 65 bis 83 Massenprozent, noch bevorzugter 70 bis 80 Massenprozent, beispielsweise 67 Massenprozent, bezogen auf die Gesamtmasse des Gels, von d-Limonen, und von 1 bis 40 Massenprozent, vorzugsweise von 10 bis 20 Massenprozent, beispielsweise 19 bis 20 Massenprozent, bezogen auf die Gesamtmasse des Gels, von Ethanol.

4. Gel nach einem der Ansprüche 1 bis 3, wobei das oder die Aluminiumoxide 5 bis 25 Massenprozent, vorzugsweise 7 bis 15 Massenprozent bezogen auf die Gesamtmasse des Gels darstellen.

5. Gel nach einem der vorhergehenden Ansprüche, wobei das Tensid unter nichtionischen Tensiden wie Blockcopolymeren, sequenziert wie sequenzierte Copolymere von Ethylenoxid und Propylenoxid, und ethoxylierten Fettsäuren; und Mischungen davon ausgewählt ist.

6. Gel nach einem der vorhergehenden Ansprüche, bestehend aus einer kolloidalen Lösung, vorzugsweise bestehend aus:

   - 1 bis 25 Massenprozent, vorzugsweise 5 bis 25 Massenprozent, noch bevorzugter 5 bis 20 Massenprozent, besser 7 bis 15 Massenprozent, beispielsweise 10 bis 14 Massenprozent, bezogen auf die Gesamtmasse des Gels, von mindestens einem pyrogenen Aluminiumoxid
   - 35 bis 94 Massenprozent, vorzugsweise 65 bis 83 Massenprozent, noch bevorzugter 70 bis 80 Massenprozent, beispielsweise 67 Massenprozent bezogen auf die Gesamtmasse des Gels, von d-Limonen;
   - von 1 bis 40 Massenprozent, vorzugsweise von 10 bis 20 Massenprozent, beispielsweise 19 bis 20 Massenprozent, bezogen auf die Gesamtmasse des Gels, von Ethanol.

7. Verfahren zum Entfernen einer in einer Schicht aus organischem Material an der Oberfläche eines festen Substrats enthaltenen kontaminierenden Spezies, wobei mindestens ein Zyklus durchgeführt wird, der die folgenden aufeinanderfolgenden Schritte umfasst:

   a) Auftragen des saugfähigen Gels nach einem der Ansprüche 1 bis 6 auf die Schicht, die aus einem organischen Material besteht; vorzugsweise wird das Gel durch Sprühen, mit einem Pinsel oder mit einer Kelle aufgetragen;
   b) Halten des Gels auf der aus organischem Material bestehenden Schicht mindestens so lange, dass das Gel das organische Material der aus organischem Material bestehenden Schicht teilweise oder vollständig auflöst, die kontaminierende Spezies absorbiert (damit die kontaminierende Spezies in das Gel migriert) und das Gel trocknet und einen trockenen, nicht pulverförmigen festen Rückstand bildet, der das organische Material der aus organischem Material bestehenden Schicht, die gelöst wurde, und die kontaminierende Spezies enthält;
   c) Entfernen des trockenen und festen Rückstands, der das organische Material enthält von der gelösten organischen Schicht und der kontaminierenden Spezies; vorzugsweise wird der trockene und feste Rückstand von der Oberfläche des festen Substrats durch Bürsten und/oder Absaugen entfernt.

8. Verfahren nach Anspruch 7, wobei die kontaminierende Spezies eine radioaktive und/oder chemisch toxische und/oder toxische kontaminierende Spezies aufgrund ihrer Form und/oder Größe ist; vorzugsweise ist die toxische kontaminierende Spezies aufgrund ihrer Form und/oder Größe eine kontaminierende Spezies, die in Form fester Partikel wie Mikropartikel oder Nanopartikel, beispielsweise in Form von Fasern wie Mikrofasern oder Nanofasern, in Form von Nanoröhrchen oder in Form von Kristallen wie Nanokristallen vorliegt.

9. Verfahren nach einem der Ansprüche 7 bis 8, wobei die kontaminierende Spezies aus Metallen und Metalloiden in Form von Metall, Metalloid oder Ion, vorzugsweise unter "Schwermetallen" und toxischen Metallen und Metalloiden in Form von Metall, Metalloid oder Ion; Verbindungen dieser Metalle und Metalloide wie organometallische Verbindungen, Metallsalze, Metalloxide, Metallkarbide usw.; Keramik; und Gläsern beispielsweise in Form von Glaswolle ausgewählt sind; vorzugsweise sind "Schwermetalle", und toxische Metalle und Metalloide Antimon, Arsen, Cadmium, Chrom, Kupfer, Blei, Quecksilber, Nickel, Selen, Tellur, Thallium und Zinn.

10. Verfahren nach Anspruch 9, wobei die kontaminierende Spezies Asbest ist.

**11.** Verfahren nach einem der Ansprüche 7 bis 10, wobei die Schicht, die aus einem organischen Material besteht, das eine kontaminierende Spezies enthält, eine Oberflächenschicht eines festen Substrats ist, das aus dem (gleichen) organischen Material besteht, vorzugsweise ist dieses organische Material aus Farben, Lacken, organischen Polymeren und organischen Harzen wie Epoxidharzen ausgewählt; vorzugsweise ist das aus einem organischen Material bestehende feste Substrat ein massives festes Substrat oder eine Schicht, wie eine Lack- oder Epoxidharzschicht, beispielsweise eine Lack- oder Epoxidharzschicht, die eine Beschichtung auf einer Oberfläche eines Substrats bildet.

**12.** Verfahren nach einem der Ansprüche 7 bis 11, wobei die Schicht, die aus einem organischen Material besteht, das eine kontaminierende Spezies enthält, eine Schicht ist, die sich auf einer Oberfläche eines festen Substrats befindet, wobei diese Schicht in Form einer durchgehenden Schicht oder (einer) diskreten Fleckstelle(n) des organischen Materials, das eine kontaminierende Spezies enthält, vorliegt; vorzugsweise ist das organische Material aus klebrigen organischen Materialien ausgewählt.

**13.** Verfahren nach Anspruch 12, wobei das organische Material aus Ölen wie Kohlenwasserstoffölen, Bitumen, Teer und Fetten ausgewählt ist.

**14.** Verfahren nach einem der Ansprüche 7 bis 13, wobei das Gel im Verhältnis von 100 g bis 10000 g, vorzugsweise 500 g bis 5000 g Gel pro m$^2$ Oberfläche, noch bevorzugter 500 bis 1500 g Gel pro m$^2$ Oberfläche, besser 600 bis 1000 g, auf die Oberflächenschicht aufgetragen wird, was im Allgemeinen einer auf der Oberfläche abgelagerten Geldicke von 0,1 mm bis 1 cm, vorzugsweise 0,5 mm bis 5 mm entspricht.

**15.** Verfahren nach einem der Ansprüche 7 bis 14, wobei das Gel für eine Dauer von 2 bis 72 Stunden, vorzugsweise 4 bis 48 Stunden, noch bevorzugter 6 bis 24 Stunden auf der Oberfläche gehalten wird.

**16.** Verfahren nach einem der Ansprüche 7 bis 15, wobei der trockene und feste Rückstand in Form von Partikeln, beispielsweise Glitter, mit einer Größe von 1 bis 10 mm, vorzugsweise von 2 bis 5 mm, vorliegt.

**17.** Verfahren nach einem der Ansprüche 7 bis 16, wobei der Zyklus 1 bis 10 Mal unter Verwendung des gleichen Gels in allen Zyklen oder unter Verwendung verschiedener Gels in einem oder mehreren Zyklus/Zyklen wiederholt wird.

**18.** Verfahren nach einem der Ansprüche 7 bis 17, wobei in Schritt b) das Gel vor der vollständigen Trocknung mit einem Lösungsmittel, vorzugsweise mit dem Lösungsmittel des in Schritt a) aufgetragenen Gels, befeuchtet wird.

**Claims**

**1.** Suctionable gel for eliminating a contaminant species contained in a layer consisting of an organic material, on the surface of a solid substrate, consisting of a colloidal solution comprising, preferably consisting of:

- 1% to 25% by weight, preferably 5% to 25% by weight, preferably 5% to 20% by weight, better yet 7% to 15% by weight, for example 10% to 14% by weight, based on the total weight of the gel, of at least one inorganic viscosifying agent consisting of one or more alumina(s) selected from among pyrogenic aluminas;
- 13% to 99% by weight, preferably 80% to 95% by weight, for example 90% by weight, based on the total weight of the gel, of one or more organic solvent(s) selected from among the terpenes;
- optionally from 1% to 40% by weight, preferably from 10% to 20% by weight, based on to the total weight of the gel, of ethanol;
- optionally from 0.01% to 10% by weight, based on the total weight of the gel, of at least one dye and/or pigment;
- optionally from 0.1% to 2% by weight, based on the total weight of the gel, of at least one surfactant;
- optionally, from 0.1% to 10% by weight, preferably from 1% to 5% by weight, based on the total weight of the gel, of at least one agent extracting the contaminant species, for example of at least one agent extracting radionuclides, preferably selected from zeolites and clays.

**2.** Gel according to claim 1, wherein the terpenes are selected from among terpene hydrocarbons, oxygenated terpene compounds, and isomers, in particular optical isomers thereof; preferably the terpenes are selected from among ocimene, α-pinene, β-pinene, limonene, menthol, menthone, terpineol, isoborneol, camphor, nerol, citronellal, citronellol, myrcene, myrcenol, linalool, geraniol, and isomers in particular optical isomers thereof; preferably still, the gel comprises, as organic solvent selected from among terpenes, preferably as the only organic solvent selected from among terpenes, d-limonene.

3. Gel according to claim 2, comprising from 35% to 94% by weight, preferably from 65% to 83% by weight, preferably still from 70% to 80% by weight, for example 67% by weight, based on the total weight of the gel, of d-limonene, and from 1% to 40% by weight, preferably from 10% to 20% by weight, for example from 19% to 20% by weight, based on the total weight of the gel, of ethanol.

4. Gel according to any one of claims 1 to 3, wherein the alumina(s) represent(s) from 5% to 25% by weight, preferably from 7% to 15% by weight based on the total weight of the gel.

5. Gel according to any one of the preceding claims, wherein the surfactant is selected from among non-ionic surfactants such as block copolymers, like block copolymers of ethylene oxide and propylene oxide, and ethoxylated fatty acids; and the mixtures thereof.

6. Gel according to any one of the preceding claims, consisting of a colloidal solution comprising, preferably consisting of:

- 1% to 25% by weight, preferably 5% to 25% by weight, preferably still 5% to 20% by weight, better yet 7% to 15% by weight, for example 10% to 14% by weight, based on the total weight of the gel, of at least one pyrogenic alumina;
- 35% to 94% by weight, preferably 65% to 83% by weight, more preferably 70% to 80% by weight, for example 67% by weight, based on the total weight of the gel, of d-limonene ;
- from 1% to 40% by weight, preferably from 10 to 20% by weight, for example 19% to 20% by weight, based on the total weight of the gel, of ethanol.

7. Method for eliminating a contaminant species contained in a layer consisting of an organic material on the surface of a solid substrate, wherein at least one cycle is carried out comprising the following successive steps:

a) applying the suctionable gel according to any one of claims 1 to 6, onto said layer consisting of an organic material; preferably, the gel is applied by means of spraying, with a brush or with a trowel;
b) maintaining the gel on the layer consisting of an organic material at least for a period of time that is sufficient in order for the gel to dissolve partly or totally, the organic material of the layer consisting of an organic material; to absorb the contaminant species (in order for the contaminant species to migrate into the gel); and in order for the gel to dry and form a dry, solid, and non-pulverulent residue containing the organic material of the layer consisting of an organic material that has been dissolved, and the contaminant species;
c) eliminating the dry and solid residue containing the organic material of the organic layer that has been dissolved, and the contaminant species; preferably the dry and solid residue is eliminated from the surface of the solid substrate by means of brushing and/or suctioning.

8. Method according to claim 7, wherein the contaminant species is a contaminant species that is radioactive, and/or chemically toxic, and/or toxic on account of its shape and/or of its size; preferably, the contaminant species which is toxic on account of its shape and/or of its size is a contaminant species that is in the form of solid particles such as microparticles, or nanoparticles, for example in the form of fibres such as microfibres or nanofibres, in the form of nanotubes, or in the form of crystals such as nanocrystals.

9. Method according to according to any one of claims 7 to 8, wherein the contaminant species is selected from among metals and metalloids in the form of a metal, a metalloid, or in ionic form, preferably from among metals referred to as "heavy metals", and toxic metals and metalloids in the form of a metal, a metalloid, or in ionic form; the compounds of these metals and metalloids such as organometallic compounds, metal salts, metal oxides, metal carbides, etc; ceramics; and glasses for example in the form of glass wool; preferably the metals referred to as "heavy metals", and the toxic metals and metalloids are antimony, arsenic, cadmium, chromium, copper, lead, mercury, nickel, selenium, tellurium, thallium, and tin.

10. Method according to claim 9, wherein the contaminant species is asbestos.

11. Method according to any one of claims 7 to 10, wherein the layer constituted of an organic material containing a contaminant species is a surface layer of a solid substrate consisting of the said (the same) organic material, preferably this organic material is selected from among paints, lacquers, organic polymers, and organic resins such as epoxy resins; preferably the solid substrate consisting of an organic material is a bulk solid substrate or a layer, such as a layer of paint or of epoxy resin, for example a layer of paint or of epoxy resin forming a coating on a surface of a substrate.

12. Method according to any one of claims 7 to 11, wherein the layer consisting of an organic material containing a contaminant species, is a layer that is found on a surface of a solid substrate, this layer being present in the form of a continuous layer, or in the form of a spot, or discrete spots of the organic material containing a contaminant species; preferably, the organic material is selected from sticky organic materials.

13. Method according to claim 12, wherein the organic material is selected from oils, such as hydrocarbon oils, bitumens, tars and greases.

14. Method according to any one of claims 7 to 13, wherein the gel is applied on to the surface layer in a proportion of 100 g to 10000 g, preferably from 500 g to 5000 g of gel per $m^2$ of surface area, more preferably from 500 to 1500 g of gel per $m^2$ of surface area, better still from 600 to 1000 g of gel per $m^2$ of surface area, which generally corresponds to a thickness of gel deposited on the surface from 0.1 mm to 1 cm, preferably from 0.5 mm to 5 mm.

15. Method according to any one of claims 7 to 14, wherein the gel is maintained on the surface for a period of 2 hours to 72 hours, preferably from 4 to 48 hours, more preferably from 6 to 24 hours.

16. Method according to any one of claims 7 to 15, wherein the dry and solid residue is in the form of particles, for example flakes, of a size of 1 to 10 mm, preferably from 2 to 5 mm.

17. Method according to any one of claims 7 to 16, wherein the cycle is repeated from 1 to 10 times by using the same gel during all the cycles or by using different gels during one or more cycle(s).

18. Method according to any one of claims 7 to 17, wherein during step b), the gel, before total drying, is rewetted with a solvent, preferably with the solvent of the gel applied during step a).

FIG. 1

FIG. 2

FIG. 3

FIG. 4

FIG. 5

FIG. 6

FIG. 7

FIG. 8

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9909134 A1
- FR 2827530 A1
- FR 2891470 A1
- FR 2962046 A1
- WO 2012001046 A1
- FR 3003763 A1
- WO 2014154818 A1
- FR 3027310 A1
- WO 2014154817 A1
- FR 2957929 A1
- WO 201200104 A1